(19) Europäisches Patentamt
European Patent Office
Office européen des brevets

(11) **EP 4 425 933 A1**

(12) **EUROPEAN PATENT APPLICATION**
published in accordance with Art. 153(4) EPC

(43) Date of publication:
**04.09.2024 Bulletin 2024/36**

(21) Application number: **22887585.2**

(22) Date of filing: **26.10.2022**

(51) International Patent Classification (IPC):
*H04N 19/96* (2014.01)          *H04N 19/503* (2014.01)
*H04N 19/70* (2014.01)          *H04N 19/597* (2014.01)
*H04N 19/105* (2014.01)

(52) Cooperative Patent Classification (CPC):
**H04N 19/105; H04N 19/503; H04N 19/597;**
**H04N 19/70; H04N 19/96**

(86) International application number:
**PCT/KR2022/016413**

(87) International publication number:
**WO 2023/075389 (04.05.2023 Gazette 2023/18)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **27.10.2021 KR 20210144393**

(71) Applicant: **LG Electronics Inc.**
**Yeongdeungpo-gu**
**Seoul 07336 (KR)**

(72) Inventor: **HUR, Hyejung**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **POINT CLOUD DATA TRANSMISSION DEVICE AND METHOD, AND POINT CLOUD DATA RECEPTION DEVICE AND METHOD**

(57) A point cloud data transmission method according to embodiments may comprise the steps of: encoding point cloud data; and transmitting a bitstream comprising the point cloud data. A point cloud data reception method according to embodiments may comprise the steps of: receiving a bitstream comprising point cloud data; and decoding the point cloud data.

FIG. 1

EP 4 425 933 A1

**Description**

[Technical Field]

Embodiments relate to a method and device for processing point cloud content.

[Background Art]

Point cloud content is content represented by a point cloud, which is a set of points belonging to a coordinate system representing a three-dimensional space. The point cloud content may express media configured in three dimensions, and is used to provide various services such as virtual reality (VR), augmented reality (AR), mixed reality (MR), and self-driving services. However, tens of thousands to hundreds of thousands of point data are required to represent point cloud content. Therefore, there is a need for a method for efficiently processing a large amount of point data.

[Disclosure]

[Technical Problem]

Embodiments provide a device and method for efficiently processing point cloud data. Embodiments provide a point cloud data processing method and device for addressing latency and encoding/decoding complexity.
The technical scope of the embodiments is not limited to the aforementioned technical objects, and may be extended to other technical objects that may be inferred by those skilled in the art based on the entire contents disclosed herein.

[Technical Solution]

To achieve these objects and other advantages and in accordance with the purpose of the disclosure, as embodied and broadly described herein, a method of transmitting point cloud data may include encoding point cloud data, and transmitting a bitstream including the point cloud data. In another aspect of the present disclosure, a method of receiving point cloud data may include receiving a bitstream including point cloud data, and decoding the point cloud data.

[Advantageous Effects]

Devices and methods according to embodiments may process point cloud data with high efficiency.
The devices and methods according to the embodiments may provide a high-quality point cloud service.
The devices and methods according to the embodiments may provide point cloud content for providing general-purpose services such as a VR service and a self-driving service.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts. In the drawings:

FIG. 1 shows an exemplary point cloud content providing system according to embodiments;
FIG. 2 is a block diagram illustrating a point cloud content providing operation according to embodiments;
FIG. 3 illustrates an exemplary process of capturing a point cloud video according to embodiments;
FIG. 4 illustrates an exemplary point cloud encoder according to embodiments;
FIG. 5 shows an example of voxels according to embodiments;
FIG. 6 shows an example of an octree and occupancy code according to embodiments;
FIG. 7 shows an example of a neighbor node pattern according to embodiments;
FIG. 8 illustrates an example of point configuration in each LOD according to embodiments;
FIG. 9 illustrates an example of point configuration in each LOD according to embodiments;
FIG. 10 illustrates a point cloud decoder according to embodiments;

FIG. 11 illustrates a point cloud decoder according to embodiments;

FIG. 12 illustrates a transmission device according to embodiments;

FIG. 13 illustrates a reception device according to embodiments;

FIG. 14 illustrates an exemplary structure operable in connection with point cloud data transmission/reception methods/devices according to embodiments;

FIG. 15 illustrates building an integrated prediction tree according to embodiments;

FIG. 16 illustrates a point cloud data transmission device according to embodiments;

FIG. 17 illustrates a point cloud data reception device according to embodiments;

FIG. 18 illustrates a bitstream containing point cloud data according to embodiments;

FIG. 19 shows a sequence parameter set according to embodiments;

FIG. 20 shows a geometry parameter set according to embodiments;

FIG. 21 shows a tile parameter set according to embodiments;

FIG. 22 shows a geometry slice header according to embodiments;

FIG. 23 shows geometry predictive tree data according to embodiments;

FIG. 24 illustrates a point cloud data transmission method according to embodiments; and

FIG. 25 illustrates a method of receiving point cloud data according to embodiments.

[Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

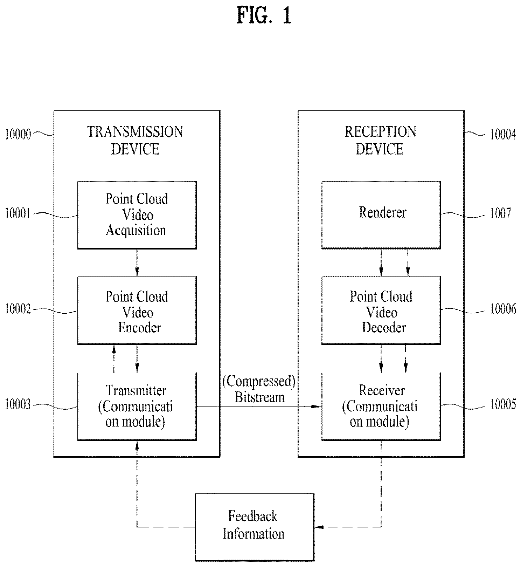

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquirer 10001, a point cloud video encoder 10002, and/or a transmitter (or communication module) 10003.

The point cloud video acquirer 10001 according to the embodiments acquires a point cloud video through a processing process such as capture, synthesis, or generation. The point cloud video is point cloud content represented by a point cloud, which is a set of points positioned in a 3D space, and may be referred to as point cloud video data. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (e.g., a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (e.g., a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (e.g., in a reverse process to the operation of the point cloud video encoder 10002). Accordingly, the point cloud video decoder 10006 may decode the point cloud video data by performing point cloud decompression coding, which is the inverse process of the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The point cloud content providing system may process (encode/decode) point cloud data based on the feedback information. Accordingly, the point cloud video data decoder 10006 may perform a decoding operation based on the feedback information. The reception device 10004 may transmit the feedback information to the transmission device 10000. The transmission device 10000 (or the point cloud video data encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, or the like, and the reception device 10004 may be called a decoder, a receiving device, a receiver, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

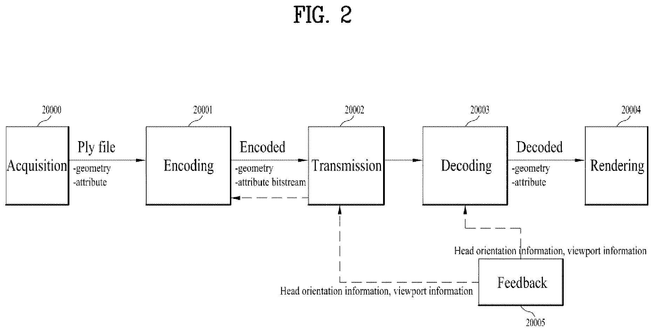

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (e.g., the point cloud transmission device 10000 or the point cloud video acquirer 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (e.g., values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, or the like, and the attribute may be called attributes, attribute information, attribute data, or the like. The point cloud content providing system (e.g., the point cloud transmission device 10000 or the point cloud video acquirer 10001) may secure point cloud data from information (e.g., depth information, color information, etc.) related to the acquisition process of the point cloud video.

The point cloud content providing system (e.g., the transmission device 10000 or the point cloud video encoder 10002) according to the embodiments may encode the point cloud data (20001). The point cloud content providing system may encode the point cloud data based on point cloud compression coding. As described above, the point cloud data may include the geometry and attributes of a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (e.g., the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (e.g., signaling information related to the geometry encoding and the attribute encoding). The point cloud content providing system may encapsulate a bitstream that carries the encoded point cloud data and transmit the same in the form of a file or segment.

The point cloud content providing system (e.g., the reception device 10004 or the receiver 10005) according to the embodiments may receive the bitstream containing the encoded point cloud data. In addition, the point cloud content providing system (e.g., the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (e.g., the reception device 10004 or the point cloud video decoder 10005) may decode the point cloud video data based on the signaling information related to encoding of the point cloud video data contained in the bitstream. The point cloud content providing system (e.g., the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (e.g., the reception device 10004 or the point cloud video decoder 10005) may reconstruct the point cloud video based on the positions according to the reconstructed geometry and the decoded attributes.

The point cloud content providing system according to the embodiments (e.g., the reception device 10004 or the renderer 10007) may render the decoded point cloud data (20004). The point cloud content providing system (e.g., the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (e.g., the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus detailed description thereof is omitted.

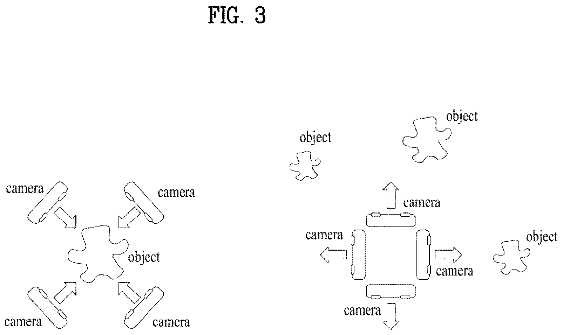

FIG. 3 illustrates an exemplary process of capturing a point cloud video according to embodiments.

FIG. 3 illustrates an exemplary point cloud video capture process of the point cloud content providing system described with reference to FIGS. 1 to 2.

Point cloud content includes a point cloud video (images and/or videos) representing an object and/or environment located in various 3D spaces (e.g., a 3D space representing a real environment, a 3D space representing a virtual environment, etc.). Accordingly, the point cloud content providing system according to the embodiments may capture a point cloud video using one or more cameras (e.g., an infrared camera capable of securing depth information, an RGB camera capable of extracting color information corresponding to the depth information, etc.), a projector (e.g., an infrared pattern projector to secure depth information), a LiDAR, or the like. The point cloud content providing system according to the embodiments may extract the shape of geometry composed of points in a 3D space from the depth information and extract the attributes of each point from the color information to secure point cloud data. An image and/or video according to the embodiments may be captured based on at least one of the inward-facing technique and the outward-facing technique.

The left part of FIG. 3 illustrates the inward-facing technique. The inward-facing technique refers to a technique of capturing images a central object with one or more cameras (or camera sensors) positioned around the central object. The inward-facing technique may be used to generate point cloud content providing a 360-degree image of a key object to the user (e.g., VR/AR content providing a 360-degree image of an object (e.g., a key object such as a character, player, object, or actor) to the user).

The right part of FIG. 3 illustrates the outward-facing technique. The outward-facing technique refers to a technique of capturing images an environment of a central object rather than the central object with one or more cameras (or camera sensors) positioned around the central object. The outward-facing technique may be used to generate point cloud content for providing a surrounding environment that appears from the user's point of view (e.g., content representing an external environment that may be provided to a user of a self-driving vehicle).

As shown in the figure, the point cloud content may be generated based on the capturing operation of one or more cameras. In this case, the coordinate system may differ among the cameras, and accordingly the point cloud content providing system may calibrate one or more cameras to set a global coordinate system before the capturing operation. In addition, the point cloud content providing system may generate point cloud content by synthesizing an arbitrary image and/or video with an image and/or video captured by the above-described capture technique. The point cloud content providing system may not perform the capturing operation described in FIG. 3 when it generates point cloud content representing a virtual space. The point cloud content providing system according to the embodiments may perform post-processing on the captured image and/or video. In other words, the point cloud content providing system may remove an unwanted area (e.g., a background), recognize a space to which the captured images and/or videos are connected, and, when there is a spatial hole, perform an operation of filling the spatial hole.

The point cloud content providing system may generate one piece of point cloud content by performing coordinate transformation on points of the point cloud video secured from each camera. The point cloud content providing system may perform coordinate transformation on the points based on the coordinates of the position of each camera. Accordingly, the point cloud content providing system may generate content representing one wide range, or may generate point cloud content having a high density of points.

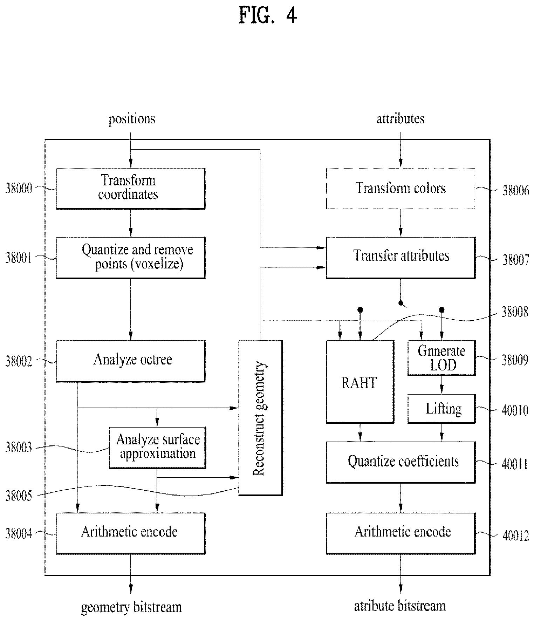

FIG. 4 illustrates an exemplary point cloud encoder according to embodiments.

FIG. 4 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud encoder may perform geometry encoding and attribute encoding. The geometry encoding is performed before the attribute encoding.

The point cloud encoder according to the embodiments includes a coordinate transformer (Transform coordinates) 40000, a quantizer (Quantize and remove points (voxelize)) 40001, an octree analyzer (Analyze octree) 40002, and a surface approximation analyzer (Analyze surface approximation) 40003, an arithmetic encoder (Arithmetic encode) 40004, a geometry reconstructor (Reconstruct geometry) 40005, a color transformer (Transform colors) 40006, an attribute transformer (Transform attributes) 40007, a RAHT transformer (RAHT) 40008, an LOD generator (Generate LOD) 40009, a lifting transformer (Lifting) 40010, a coefficient quantizer (Quantize coefficients) 40011, and/or an arithmetic encoder (Arithmetic encode) 40012.

The coordinate transformer 40000, the quantizer 40001, the octree analyzer 40002, the surface approximation analyzer 40003, the arithmetic encoder 40004, and the geometry reconstructor 40005 may perform geometry encoding. The geometry encoding according to the embodiments may include octree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 40000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 40001 according to the embodiments quantizes the geometry. For example, the quantizer 40001 may quantize the points based on a minimum position value of all points (e.g., a minimum value on each of the X, Y, and Z axes). The quantizer 40001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 40001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 40001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 40002 according to the embodiments performs octree geometry coding (or octree coding) to present voxels in an octree structure. The octree structure represents points matched with voxels, based on the octal tree structure.

The surface approximation analyzer 40003 according to the embodiments may analyze and approximate the octree. The octree analysis and approximation according to the embodiments is a process of analyzing a region containing a plurality of points to efficiently provide octree and voxelization.

The arithmetic encoder 40004 according to the embodiments performs entropy encoding on the octree and/or the approximated octree. For example, the encoding scheme includes arithmetic encoding. As a result of the encoding, a geometry bitstream is generated.

The color transformer 40006, the attribute transformer 40007, the RAHT transformer 40008, the LOD generator 40009, the lifting transformer 40010, the coefficient quantizer 40011, and/or the arithmetic encoder 40012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 40006 according to the embodiments performs color transform coding of transforming color values (or textures) included in the attributes. For example, the color transformer 40006 may transform the format of color information (for example, from RGB to YCbCr). The operation of the color transformer 40006 according to embodiments may be optionally applied according to the color values included in the attributes.

The geometry reconstructor 40005 according to the embodiments reconstructs (decompresses) the octree and/or the approximated octree. The geometry reconstructor 40005 reconstructs the octree/voxels based on the result of analyzing the distribution of points. The reconstructed octree/voxels may be referred to as reconstructed geometry (restored geometry).

The attribute transformer 40007 according to the embodiments performs attribute transformation to transform the attributes based on the reconstructed geometry and/or the positions on which geometry encoding is not performed. As described above, since the attributes are dependent on the geometry, the attribute transformer 40007 may transform the attributes based on the reconstructed geometry information. For example, based on the position value of a point included in a voxel, the attribute transformer 40007 may transform the attribute of the point at the position. As described above, when the position of the center of a voxel is set based on the positions of one or more points included in the voxel, the attribute transformer 40007 transforms the attributes of the one or more points. When the trisoup geometry encoding is performed, the attribute transformer 40007 may transform the attributes based on the trisoup geometry encoding.

The attribute transformer 40007 may perform the attribute transformation by calculating the average of attributes or attribute values of neighboring points (e.g., color or reflectance of each point) within a specific position/radius from the position (or position value) of the center of each voxel. The attribute transformer 40007 may apply a weight according to the distance from the center to each point in calculating the average. Accordingly, each voxel has a position and a calculated attribute (or attribute value).

The attribute transformer 40007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) may be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 40007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 40009.

The RAHT transformer 40008 according to the embodiments performs RAHT coding for predicting attribute information based on the reconstructed geometry information. For example, the RAHT transformer 40008 may predict attribute information of a node at a higher level in the octree based on the attribute information associated with a node at a lower level in the octree.

The LOD generator 40009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 40010 according to the embodiments performs lifting transform coding of transforming the attributes a point cloud based on weights. As described above, lifting transform coding may be optionally applied.

The coefficient quantizer 40011 according to the embodiments quantizes the attribute-coded attributes based on coefficients.

The arithmetic encoder 40012 according to the embodiments encodes the quantized attributes based on arithmetic coding.

Although not shown in the figure, the elements of the point cloud encoder of FIG. 4 may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder of FIG. 4 described above. Additionally, the one or more processors may operate or execute a set of software programs and/or instructions for performing the operations and/or functions of the elements of the point cloud encoder of FIG. 4. The one or more memories according to the embodiments may include a high speed random access memory, or include a non-volatile memory (e.g., one or more magnetic disk storage devices, flash memory devices, or other non-volatile solid-state memory devices).

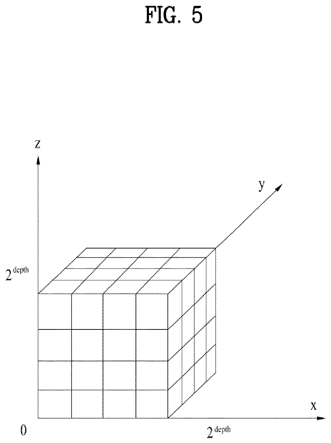

FIG. 5 shows an example of voxels according to embodiments.

FIG.5 shows voxels positioned in a 3D space represented by a coordinate system composed of three axes, which are the X-axis, the Y-axis, and the Z-axis. As described with reference to FIG. 4, the point cloud encoder (e.g., the quantizer 40001) may perform voxelization. Voxel refers to a 3D cubic space generated when a 3D space is divided into units (unit=1.0) based on the axes representing the 3D space (e.g., X-axis, Y-axis, and Z-axis). FIG. 5 shows an example of voxels generated through an octree structure in which a cubical axis-aligned bounding box defined by two poles (0, 0, 0) and (2d, 2d, 2d) is recursively subdivided. One voxel includes at least one point. The spatial coordinates of a voxel may be estimated from the positional relationship with a voxel group. As described above, a voxel has an attribute (such as color or reflectance) like pixels of a 2D image/video. The details of the voxel are the same as those described with reference to FIG. 4, and therefore a description thereof is omitted.

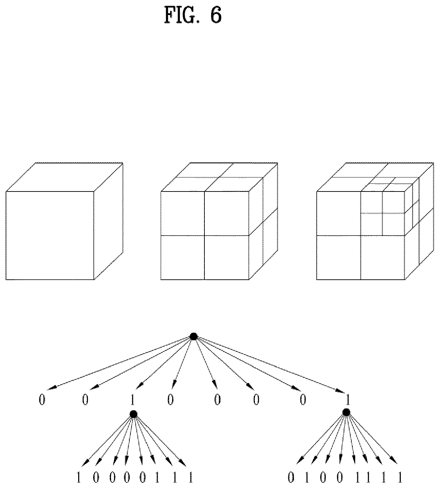

FIG. 6 shows an example of an octree and occupancy code according to embodiments.

As described with reference to FIGS. 1 to 4, the point cloud content providing system (point cloud video encoder 10002) or the point cloud encoder (e.g., the octree analyzer 40002) performs octree geometry coding (or octree coding) based on an octree structure to efficiently manage the region and/or position of the voxel.

The upper part of FIG. 6 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles (0, 0, 0) and (2d, 2d, 2d). Here, 2d may be set to a value constituting the smallest bounding box surrounding all points of the point cloud content (or point cloud video). Here, d denotes the depth of the octree. The value of d is determined in the following equation. In the following equation, (xintn, yintn, zintn) denotes the positions (or position values) of quantized points.

$$\mathrm{d} = Ceil\left(Log2\left(Max\left(x_n^{int}, y_n^{int}, z_n^{int}, n = 1, \dots, N\right) + 1\right)\right)$$

As shown in the middle of the upper part of FIG. 6, the entire 3D space may be divided into eight spaces according to partition. Each divided space is represented by a cube with six faces. As shown in the upper right of FIG. 6, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 6 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 6 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (e.g., the arithmetic encoder 40004) according to the embodiments may perform entropy encoding on the occupancy codes. In order to increase the compression efficiency, the point cloud encoder may perform intra/inter-coding on the occupancy codes. The reception device (e.g., the reception device 10004 or the point cloud video decoder 10006) according to the embodiments reconstructs the octree based on the occupancy codes.

The point cloud encoder (e.g., the point cloud encoder of FIG. 4 or the octree analyzer 40002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 40004) according to the embodiments may perform entropy coding on the positions (or position values) of the points.

The point cloud encoder (e.g., the surface approximation analyzer 40003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector ($\Delta$x, $\Delta$y, $\Delta$z) of the edge, and the vertex position value (relative position value within the edge). When the trisoup geometry encoding is applied, the point cloud encoder according to the embodiments (e.g., the geometry reconstructor 40005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction.

$$\text{i) } \begin{bmatrix} \mu_x \\ \mu_y \\ \mu_z \end{bmatrix} = \frac{1}{n}\sum_{i=1}^{n} \begin{bmatrix} x_i \\ y_i \\ z_i \end{bmatrix}; \text{ ii) } \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix}; \text{ iii) } \begin{bmatrix} \sigma_x^2 \\ \sigma_y^2 \\ \sigma_z^2 \end{bmatrix} = \sum_{i=1}^{n} \begin{bmatrix} \bar{x}_i^2 \\ \bar{y}_i^2 \\ \bar{z}_i^2 \end{bmatrix}$$

The minimum value of the sum is estimated, and the projection process is performed according to the axis with the minimum value. For example, when the element x is the minimum, each vertex is projected on the x-axis with respect to the center of the block, and projected on the (y, z) plane. When the values obtained through projection on the (y, z) plane are (ai, bi), the value of $\theta$ is estimated through atan2(bi, ai), and the vertices are ordered based on the value of $\theta$. The table below shows a combination of vertices for creating a triangle according to the number of the vertices. The vertices are ordered from 1 to n. The table below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

TABLE 2-1 Triangles formed from vertices ordered 1,...,n

| n | triangles |
|---|---|
| 3 | (1,2,3) |
| 4 | (1,2,3), (3,4,1) |
| 5 | (1,2,3), (3,4,5), (5,1,3) |
| 6 | (1,2,3), (3,4,5), (5,6,1), (1,3,5) |
| 7 | (1,2,3), (3,4,5), (5,6,7), (7,1,3), (3,5,7) |
| 8 | (1,2,3), (3,4,5), (5,6,7), (7,8,1), (1,3,5), (5,7,1) |
| 9 | (1,2,3), (3,4,5), (5,6,7), (7,8,9), (9,1,3), (3,5,7), (7,9,3) |
| 10 | (1,2,3), (3,4,5), (5,6,7), (7,8,9), (9,10,1), (1,3,5), (5,7,9), (9,1,5) |
| 11 | (1,2,3), (3,4,5), (5,6,7), (7,8,9), (9,10,11), (11,1,3), (3,5,7), |

(continued)

| n | triangles |
|---|---|
| | (7,9,11), (11,3,7) |
| 12 | (1,2,3), (3,4,5), (5,6,7), (7,8,9), (9,10,11), (11,12,1), (1,3,5), (5,7,9), (9,11,1), (1,5,9) |

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

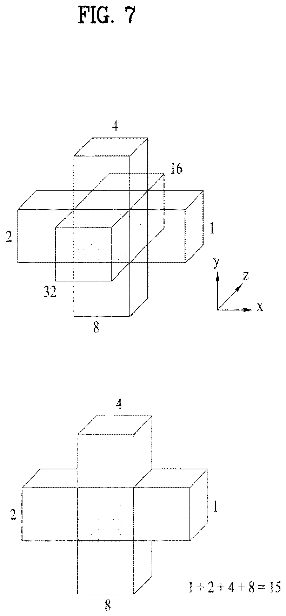

FIG. 7 shows an example of a neighbor node pattern according to embodiments.

In order to increase the compression efficiency of the point cloud video, the point cloud encoder according to the embodiments may perform entropy coding based on context adaptive arithmetic coding.

As described with reference to FIGS. 1 to 6, the point cloud content providing system or the point cloud encoder (e.g., the point cloud video encoder 10002, the point cloud encoder or arithmetic encoder 40004 of FIG. 4) may perform entropy coding on the occupancy code immediately. In addition, the point cloud content providing system or the point cloud encoder may perform entropy encoding (intra encoding) based on the occupancy code of the current node and the occupancy of neighboring nodes, or perform entropy encoding (inter encoding) based on the occupancy code of the previous frame. A frame according to embodiments represents a set of point cloud videos generated at the same time. The compression efficiency of intra encoding/inter encoding according to the embodiments may depend on the number of neighboring nodes that are referenced. When the bits increase, the operation becomes complicated, but the encoding may be biased to one side, which may increase the compression efficiency. For example, when a 3-bit context is given, coding needs to be performed using $2^3 = 8$ methods. The part divided for coding affects the complexity of implementation. Accordingly, it is necessary to meet an appropriate level of compression efficiency and complexity.

FIG. 7 illustrates a process of obtaining an occupancy pattern based on the occupancy of neighbor nodes. The point cloud encoder according to the embodiments determines occupancy of neighbor nodes of each node of the octree and obtains a value of a neighbor pattern. The neighbor node pattern is used to infer the occupancy pattern of the node. The upper part of FIG. 7 shows a cube corresponding to a node (a cube positioned in the middle) and six cubes (neighbor nodes) sharing at least one face with the cube. The nodes shown in the figure are nodes of the same depth. The numbers shown in the figure represent weights (1, 2, 4, 8, 16, and 32) associated with the six nodes, respectively. The weights are assigned sequentially according to the positions of neighboring nodes.

The lower part of FIG. 7 shows neighbor node pattern values. A neighbor node pattern value is the sum of values multiplied by the weight of an occupied neighbor node (a neighbor node having a point). Accordingly, the neighbor node pattern values are 0 to 63. When the neighbor node pattern value is 0, it indicates that there is no node having a point (no occupied node) among the neighbor nodes of the node. When the neighbor node pattern value is 63, it indicates that all neighbor nodes are occupied nodes. As shown in the figure, since neighbor nodes to which weights 1, 2, 4, and 8 are assigned are occupied nodes, the neighbor node pattern value is 15, the sum of 1, 2, 4, and 8. The point cloud encoder may perform coding according to the neighbor node pattern value (for example, when the neighbor node pattern value is 63, 64 kinds of coding may be performed). According to embodiments, the point cloud encoder may reduce coding complexity by changing a neighbor node pattern value (for example, based on a table by which 64 is changed to 10 or 6).

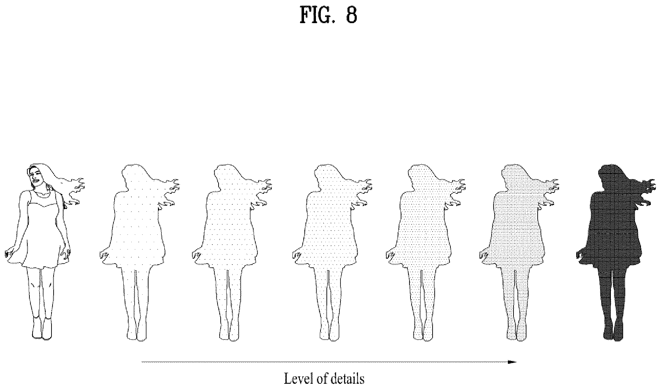

FIG. 8 illustrates an example of point configuration in each LOD according to embodiments.

As described with reference to FIGS. 1 to 7, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (e.g., the LOD generator 40009) may classify (reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

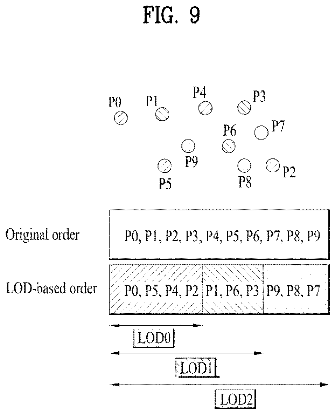

FIG. 9 illustrates an example of point configuration for each LOD according to embodiments.

As described with reference to FIGS. 1 to 8, the point cloud content providing system, or the point cloud encoder (e.g., the point cloud video encoder 10002, the point cloud encoder of FIG. 4, or the LOD generator 40009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 9 shows examples (P0 to P9) of points of the point cloud content distributed in a 3D space. In FIG. 9, the original order represents the order of points P0 to P9 before LOD generation. In FIG. 9, the LOD based order represents the order of points according to the LOD generation. Points are reorganized by LOD. Also, a high LOD contains the points belonging to lower LODs. As shown in FIG. 9, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 4, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (e.g., the coefficient quantizer 40011) may quantize and inversely quantize the residuals (which may be called residual attributes, residual attribute values, or attribute prediction residuals) obtained by subtracting a predicted attribute (attribute value) from the attribute (attribute value) of each point. The quantization process is configured as shown in the following table.

```
TABLE Attribute prediction residuals quantization pseudo code
int PCCQuantization(int value, int quantStep) {
    if( value >=0) {
        return floor(value / quantStep + 1.0 / 3.0);
    } else {
        return -floor(-value / quantStep + 1.0 / 3.0);
    }
}
```

```
TABLE Attribute prediction residuals inverse quantization pseudo code
int PCCInverseQuantization(int value, int quantStep) {
    if( quantStep ==0) {
        return value;
    } else {
        return value * quantStep;
    }
}
```

When the predictor of each point has neighbor points, the point cloud encoder (e.g., the arithmetic encoder 40012) according to the embodiments may perform entropy coding on the quantized and inversely quantized residual values as described above. When the predictor of each point has no neighbor point, the point cloud encoder according to the embodiments (e.g., the arithmetic encoder 40012) may perform entropy coding on the attributes of the corresponding point without performing the above-described operation.

The point cloud encoder according to the embodiments (e.g., the lifting transformer 40010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud encoder (e.g., coefficient quantizer 40011) according to the embodiments quantizes the predicted attribute values. In addition, the point cloud encoder (e.g., the arithmetic encoder 40012) performs entropy coding on the quantized attribute values.

The point cloud encoder (e.g., the RAHT transformer 40008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{l_{x,y,z}}$ denotes the average attribute value of voxels at level $l$. $g_{l_{x,y,z}}$ may be calculated based on $g_{l+1\,2x,y,z}$ and $g_{l+1\,2x+1,y,z}$. The weights for $g_{l_{2x,y,z}}$ and $g_{l_{2x+1,y,z}}$ are $w1 = w_{l_{2x,y,z}}$ and $w2 = w_{l_{2x+1,y,z}}$.

$$\begin{bmatrix} g_{l-1\,x,y,z} \\ h_{l-1\,x,y,z} \end{bmatrix} = T_{w1\,w2} \begin{bmatrix} g_{l\,2x,y,z} \\ g_{l\,2x+1,y,z} \end{bmatrix}, \quad T_{w1\,w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1_{x,y,z}}$ is a low-pass value and is used in the merging process at the next higher level. $h_{l-1_{x,y,z}}$ denotes high-pass coefficients. The high-pass coefficients at each step are quantized and subjected to entropy coding (e.g., encoding by the arithmetic encoder 400012). The weights are calculated as $w_{l-1_{x,y,z}} = w_{l_{2x,y,z}} + w_{l_{2x+1,y,z}}$. The root node is created through the $g_{1_{0,0,0}}$ and $g_{1\,0,0,1}$ as follows.

$$\begin{bmatrix} gDC \\ h_{0_{0,0,0}} \end{bmatrix} = T_{w1000\,w1001} \begin{bmatrix} g_{1\,0,0,0z} \\ g_{1_{0,0,1}} \end{bmatrix}$$

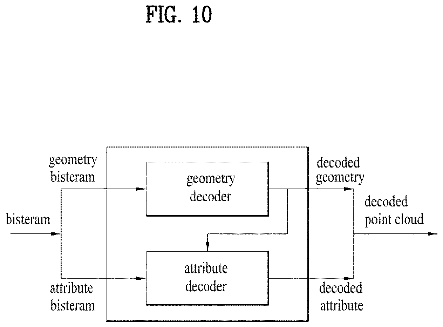

FIG. 10 illustrates a point cloud decoder according to embodiments.

The point cloud decoder illustrated in FIG. 10 is an example of the point cloud video decoder 10006 described in FIG. 1, and may perform the same or similar operations as the operations of the point cloud video decoder 10006 illustrated in FIG. 1. As shown in the figure, the point cloud decoder may receive a geometry bitstream and an attribute bitstream contained in one or more bitstreams. The point cloud decoder includes a geometry decoder and an attribute decoder. The geometry decoder performs geometry decoding on the geometry bitstream and outputs decoded geometry. The attribute decoder performs attribute decoding based on the decoded geometry and the attribute bitstream, and outputs decoded attributes. The decoded geometry and decoded attributes are used to reconstruct point cloud content (a decoded point cloud).

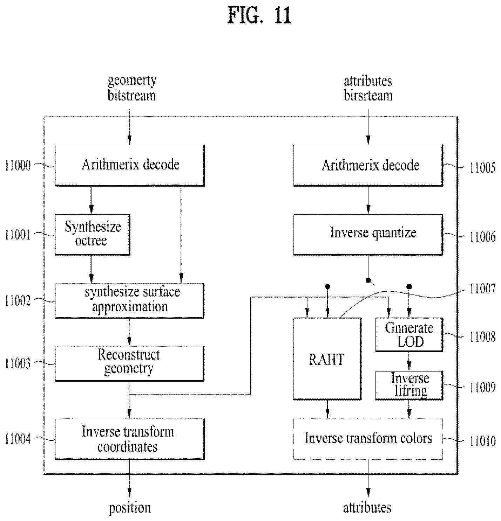

FIG. 11 illustrates a point cloud decoder according to embodiments.

The point cloud decoder illustrated in FIG. 11 is an example of the point cloud decoder illustrated in FIG. 10, and may perform a decoding operation, which is a reverse process to the encoding operation of the point cloud encoder illustrated in FIGS. 1 to 9.

As described with reference to FIGS. 1 and 10, the point cloud decoder may perform geometry decoding and attribute decoding. The geometry decoding is performed before the attribute decoding.

The point cloud decoder according to the embodiments includes an arithmetic decoder (Arithmetic decode) 11000, an octree synthesizer (Synthesize octree) 11001, a surface approximation synthesizer (Synthesize surface approximation) 11002, and a geometry reconstructor (Reconstruct geometry) 11003, a coordinate inverse transformer (Inverse transform coordinates) 11004, an arithmetic decoder (Arithmetic decode) 11005, an inverse quantizer (Inverse quantize) 11006, a RAHT transformer 11007, an LOD generator (Generate LOD) 11008, an inverse lifter (inverse lifting) 11009, and/or a color inverse transformer (Inverse transform colors) 11010.

The arithmetic decoder 11000, the octree synthesizer 11001, the surface approximation synthesizer 11002, and the geometry reconstructor 11003, and the coordinate inverse transformer 11004 may perform geometry decoding. The geometry decoding according to the embodiments may include direct coding and trisoup geometry decoding. The direct coding and trisoup geometry decoding are selectively applied. The geometry decoding is not limited to the above-described example, and is performed as a reverse process to the geometry encoding described with reference to FIGS. 1 to 9.

The arithmetic decoder 11000 according to the embodiments decodes the received geometry bitstream based on the arithmetic coding. The operation of the arithmetic decoder 11000 corresponds to the inverse process of the arithmetic encoder 40004.

The octree synthesizer 11001 according to the embodiments may generate an octree by acquiring an occupancy code from the decoded geometry bitstream (or information on the geometry secured as a result of decoding). The occupancy code is configured as described in detail with reference to FIGS. 1 to 9.

When the trisoup geometry encoding is applied, the surface approximation synthesizer 11002 according to the embodiments may synthesize a surface based on the decoded geometry and/or the generated octree.

The geometry reconstructor 11003 according to the embodiments may regenerate geometry based on the surface and/or the decoded geometry. As described with reference to FIGS. 1 to 9, direct coding and trisoup geometry encoding are selectively applied. Accordingly, the geometry reconstructor 11003 directly imports and adds position information about the points to which direct coding is applied. When the trisoup geometry encoding is applied, the geometry reconstructor 11003 may reconstruct the geometry by performing the reconstruction operations of the geometry reconstructor 40005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 11004 according to the embodiments may acquire positions of the points by transforming the coordinates based on the reconstructed geometry.

The arithmetic decoder 11005, the inverse quantizer 11006, the RAHT transformer 11007, the LOD generator 11008, the inverse lifter 11009, and/or the color inverse transformer 11010 may perform the attribute decoding described with reference to FIG. 10. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 11005 according to the embodiments decodes the attribute bitstream by arithmetic coding.

The inverse quantizer 11006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 11007, the LOD generator 11008, and/or the inverse lifter 11009 may process the reconstructed geometry and the inversely quantized attributes. As described above, the RAHT transformer 11007, the LOD generator 11008, and/or the inverse lifter 11009 may selectively perform a decoding operation corresponding to the encoding of the point cloud encoder.

The color inverse transformer 11010 according to the embodiments performs inverse transform coding to inversely transform a color value (or texture) included in the decoded attributes. The operation of the color inverse transformer 11010 may be selectively performed based on the operation of the color transformer 40006 of the point cloud encoder.

Although not shown in the figure, the elements of the point cloud decoder of FIG. 11 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 11 described above. Additionally, the one or more processors may operate or execute a set of software programs and/or instructions for performing the operations and/or functions of the elements of the point cloud decoder of FIG. 11.

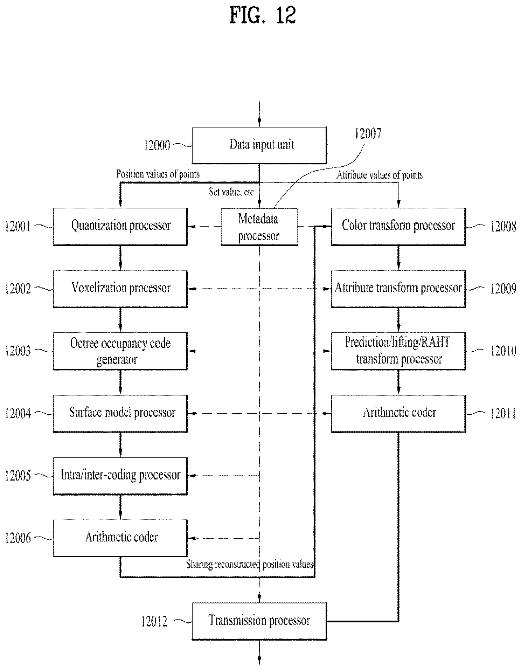

FIG. 12 illustrates a transmission device according to embodiments.

The transmission device shown in FIG. 12 is an example of the transmission device 10000 of FIG. 1 (or the point cloud encoder of FIG. 4). The transmission device illustrated in FIG. 12 may perform one or more of the operations and methods the same as or similar to those of the point cloud encoder described with reference to FIGS. 1 to 9. The transmission device according to the embodiments may include a data input unit 12000, a quantization processor 12001, a voxelization processor 12002, an octree occupancy code generator 12003, a surface model processor 12004, an intra/inter-coding processor 12005, an arithmetic coder 12006, a metadata processor 12007, a color transform processor 12008, an attribute transform processor 12009, a prediction/lifting/RAHT transform processor 12010, an arithmetic coder 12011 and/or a transmission processor 12012.

The data input unit 12000 according to the embodiments receives or acquires point cloud data. The data input unit 12000 may perform an operation and/or acquisition method the same as or similar to the operation and/or acquisition method of the point cloud video acquirer 10001 (or the acquisition process 20000 described with reference to FIG. 2).

The data input unit 12000, the quantization processor 12001, the voxelization processor 12002, the octree occupancy code generator 12003, the surface model processor 12004, the intra/inter-coding processor 12005, and the arithmetic coder 12006 perform geometry encoding. The geometry encoding according to the embodiments is the same as or similar to the geometry encoding described with reference to FIGS. 1 to 9, and thus a detailed description thereof is omitted.

The quantization processor 12001 according to the embodiments quantizes geometry (e.g., position values of points). The operation and/or quantization of the quantization processor 12001 is the same as or similar to the operation and/or quantization of the quantizer 40001 described with reference to FIG. 4. Details are the same as those described with reference to FIGS. 1 to 9.

The voxelization processor 12002 according to the embodiments voxelizes the quantized position values of the points. The voxelization processor 120002 may perform an operation and/or process the same or similar to the operation and/or the voxelization process of the quantizer 40001 described with reference to FIG. 4. Details are the same as those described with reference to FIGS. 1 to 9.

The octree occupancy code generator 12003 according to the embodiments performs octree coding on the voxelized positions of the points based on an octree structure. The octree occupancy code generator 12003 may generate an occupancy code. The octree occupancy code generator 12003 may perform an operation and/or method the same as or similar to the operation and/or method of the point cloud encoder (or the octree analyzer 40002) described with reference to FIGS. 4 and 6. Details are the same as those described with reference to FIGS. 1 to 9.

The surface model processor 12004 according to the embodiments may perform trisoup geometry encoding based on a surface model to reconstruct the positions of points in a specific region (or node) on a voxel basis. The surface model processor 12004 may perform an operation and/or method the same as or similar to the operation and/or method of the point cloud encoder (e.g., the surface approximation analyzer 40003) described with reference to FIG. 4. Details are the same as those described with reference to FIGS. 1 to 9.

The intra/inter-coding processor 12005 according to the embodiments may perform intra/inter-coding on point cloud data. The intra/inter-coding processor 12005 may perform coding the same as or similar to the intra/inter-coding described with reference to FIG. 7. Details are the same as those described with reference to FIG. 7. According to embodiments, the intra/inter-coding processor 12005 may be included in the arithmetic coder 12006.

The arithmetic coder 12006 according to the embodiments performs entropy encoding on an octree of the point cloud data and/or an approximated octree. For example, the encoding scheme includes arithmetic encoding. The arithmetic coder 12006 performs an operation and/or method the same as or similar to the operation and/or method of the arithmetic encoder 40004.

The metadata processor 12007 according to the embodiments processes metadata about the point cloud data, for example, a set value, and provides the same to a necessary processing process such as geometry encoding and/or attribute encoding. Also, the metadata processor 12007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 12008, the attribute transform processor 12009, the prediction/lifting/RAHT transform processor 12010, and the arithmetic coder 12011 perform the attribute encoding. The attribute encoding according to the embodiments is the same as or similar to the attribute encoding described with reference to FIGS. 1 to 9, and thus a detailed description thereof is omitted.

The color transform processor 12008 according to the embodiments performs color transform coding to transform color values included in attributes. The color transform processor 12008 may perform color transform coding based on the reconstructed geometry. The reconstructed geometry is the same as described with reference to FIGS. 1 to 9. Also, it performs an operation and/or method the same as or similar to the operation and/or method of the color transformer 40006 described with reference to FIG. 4 is performed. A detailed description thereof is omitted.

The attribute transform processor 12009 according to the embodiments performs attribute transformation to transform the attributes based on the reconstructed geometry and/or the positions on which geometry encoding is not performed. The attribute transform processor 12009 performs an operation and/or method the same as or similar to the operation and/or method of the attribute transformer 40007 described with reference to FIG. 4. A detailed description thereof is omitted. The prediction/lifting/RAHT transform processor 12010 according to the embodiments may code the transformed attributes by any one or a combination of RAHT coding, prediction transform coding, and lifting transform coding. The prediction/lifting/RAHT transform processor 12010 performs at least one of the operations the same as or similar to the operations of the RAHT transformer 40008, the LOD generator 40009, and the lifting transformer 40010 described with reference to FIG. 4. In addition, the prediction transform coding, the lifting transform coding, and the RAHT transform coding are the same as those described with reference to FIGS. 1 to 9, and thus a detailed description thereof is omitted.

The arithmetic coder 12011 according to the embodiments may encode the coded attributes based on the arithmetic coding. The arithmetic coder 12011 performs an operation and/or method the same as or similar to the operation and/or method of the arithmetic encoder 400012.

The transmission processor 12012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream Geom00 and one or more attribute bitstreams Attr00 and Attr10.

A slice refers to a series of syntax elements representing the entirety or part of a coded point cloud frame.

The TPS according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 12007 according to the embodiments may generate and/or process the signaling information and transmit the same to the transmission processor 12012. According to embodiments, the elements to perform geometry encoding and the elements to perform attribute encoding may share data/information with each other as indicated by dotted lines. The transmission processor 12012 according to the embodiments may perform an operation and/or transmission method the same as or similar to the operation and/or transmission method of the transmitter 10003. Details are the same as those described with reference to FIGS. 1 and 2, and thus a description thereof is omitted.

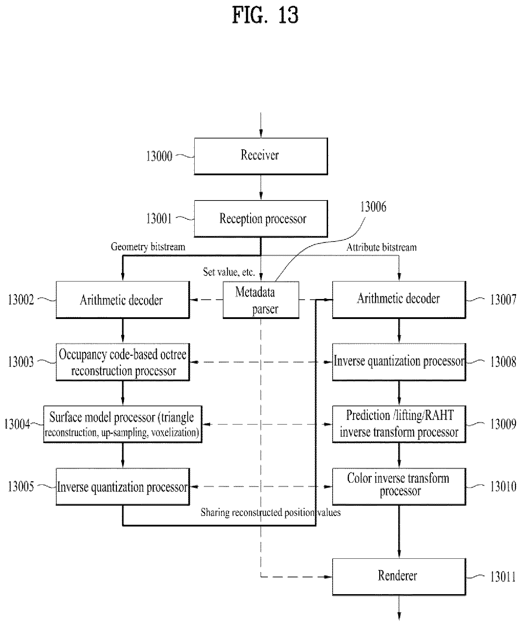

FIG. 13 illustrates a reception device according to embodiments.

The reception device illustrated in FIG. 13 is an example of the reception device 10004 of FIG. 1 (or the point cloud decoder of FIGS. 10 and 11). The reception device illustrated in FIG. 13 may perform one or more of the operations and methods the same as or similar to those of the point cloud decoder described with reference to FIGS. 1 to 11.

The reception device according to the embodiment may include a receiver 13000, a reception processor 13001, an arithmetic decoder 13002, an occupancy code-based octree reconstruction processor 13003, a surface model processor (triangle reconstruction, up-sampling, voxelization) 13004, an inverse quantization processor 13005, a metadata parser 13006, an arithmetic decoder 13007, an inverse quantization processor 13008, a prediction /lifting/RAHT inverse transform processor 13009, a color inverse transform processor 13010, and/or a renderer 13011. Each element for decoding according to the embodiments may perform a reverse process to the operation of a corresponding element for encoding according to the embodiments.

The receiver 13000 according to the embodiments receives point cloud data. The receiver 13000 may perform an operation and/or reception method the same as or similar to the operation and/or reception method of the receiver 10005 of FIG. 1. A detailed description thereof is omitted.

The reception processor 13001 according to the embodiments may acquire a geometry bitstream and/or an attribute bitstream from the received data. The reception processor 13001 may be included in the receiver 13000.

The arithmetic decoder 13002, the occupancy code-based octree reconstruction processor 13003, the surface model processor 13004, and the inverse quantization processor 13005 may perform geometry decoding. The geometry decoding according to embodiments is the same as or similar to the geometry decoding described with reference to FIGS. 1 to 10, and thus a detailed description thereof is omitted.

The arithmetic decoder 13002 according to the embodiments may decode the geometry bitstream based on arithmetic coding. The arithmetic decoder 13002 performs an operation and/or coding the same as or similar to the operation and/or coding of the arithmetic decoder 11000.

The occupancy code-based octree reconstruction processor 13003 according to the embodiments may reconstruct an octree by acquiring an occupancy code from the decoded geometry bitstream (or information about the geometry secured as a result of decoding). The occupancy code-based octree reconstruction processor 13003 performs an operation and/or method the same as or similar to the operation and/or octree generation method of the octree synthesizer 11001. When the trisoup geometry encoding is applied, the surface model processor 13004 according to the embodiments may perform trisoup geometry decoding and related geometry reconstruction (e.g., triangle reconstruction, up-sampling, voxelization) based on the surface model method. The surface model processor 13004 performs an operation the same as or similar to that of the surface approximation synthesizer 11002 and/or the geometry reconstructor 11003.

The inverse quantization processor 13005 according to the embodiments may inversely quantize the decoded geometry.

The metadata parser 13006 according to the embodiments may parse metadata contained in the received point cloud data, for example, a set value. The metadata parser 13006 may pass the metadata to geometry decoding and/or attribute decoding. The metadata is the same as that described with reference to FIG. 12, and thus a detailed description thereof is omitted.

The arithmetic decoder 13007, the inverse quantization processor 13008, the prediction/lifting/RAHT inverse transform processor 13009 and the color inverse transform processor 13010 perform attribute decoding. The attribute decoding is the same as or similar to the attribute decoding described with reference to FIGS. 1 to 10, and thus a detailed description thereof is omitted.

The arithmetic decoder 13007 according to the embodiments may decode the attribute bitstream by arithmetic coding. The arithmetic decoder 13007 may decode the attribute bitstream based on the reconstructed geometry. The arithmetic decoder 13007 performs an operation and/or coding the same as or similar to the operation and/or coding of the arithmetic decoder 11005.

The inverse quantization processor 13008 according to the embodiments may inversely quantize the decoded attribute bitstream. The inverse quantization processor 13008 performs an operation and/or method the same as or similar to the operation and/or inverse quantization method of the inverse quantizer 11006.

The prediction/lifting/RAHT inverse transform processor 13009 according to the embodiments may process the reconstructed geometry and the inversely quantized attributes. The prediction/lifting/RAHT inverse transform processor 13009 performs one or more of operations and/or decoding the same as or similar to the operations and/or decoding of the RAHT transformer 11007, the LOD generator 11008, and/or the inverse lifter 11009. The color inverse transform processor 13010 according to the embodiments performs inverse transform coding to inversely transform color values (or textures) included in the decoded attributes. The color inverse transform processor 13010 performs an operation and/or inverse transform coding the same as or similar to the operation and/or inverse transform coding of the color inverse transformer 11010. The renderer 13011 according to the embodiments may render the point cloud data.

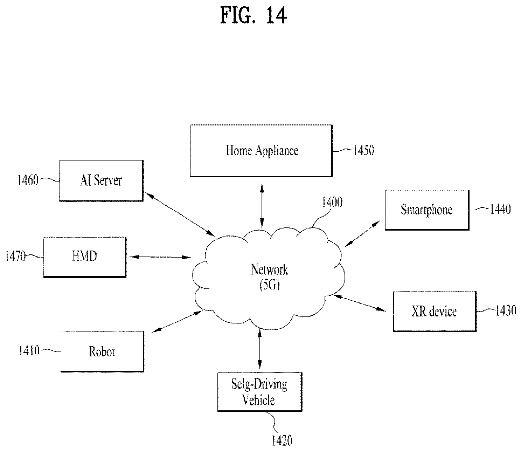

FIG. 14 illustrates an exemplary structure operable in connection with point cloud data transmission/reception methods/devices according to embodiments.

The structure of FIG. 14 represents a configuration in which at least one of a server 1460, a robot 1410, a self-driving vehicle 1420, an XR device 1430, a smartphone 1440, a home appliance 1450, and/or a head-mount display (HMD) 1470 is connected to the cloud network 1400. The robot 1410, the self-driving vehicle 1420, the XR device 1430, the smartphone 1440, or the home appliance 1450 is called a device. Further, the XR device 1430 may correspond to a point cloud data (PCC) device according to embodiments or may be operatively connected to the PCC device.

The cloud network 1400 may represent a network that constitutes part of the cloud computing infrastructure or is present in the cloud computing infrastructure. Here, the cloud network 1400 may be configured using a 3G network, 4G or Long Term Evolution (LTE) network, or a 5G network.

The server 1460 may be connected to at least one of the robot 1410, the self-driving vehicle 1420, the XR device 1430, the smartphone 1440, the home appliance 1450, and/or the HMD 1470 over the cloud network 1400 and may assist in at least a part of the processing of the connected devices 1410 to 1470.

The HMD 1470 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1410 to 1450 to which the above-described technology is applied will be described. The devices 1410 to 1450 illustrated in FIG. 14 may be operatively connected/coupled to a point cloud data transmission/reception device according to the above-described embodiments.

<PCC+XR>

The XR/PCC device 1430 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1430 may analyze 3D point cloud data or image data acquired through various sensors or from an external device and generate position data and attribute data about 3D points. Thereby, the XR/PCC device 1430 may acquire information about the surrounding space or a real object, and render and output an XR object. For example, the XR/PCC device 1430 may match an XR object including auxiliary information about a recognized object with the recognized object and output the matched XR object.

<PCC+XR+Mobile phone>

The XR/PCC device 1430 may be implemented as a mobile phone 1440 by applying PCC technology.

The mobile phone 1440 may decode and display point cloud content based on the PCC technology.

<PCC+Self-driving+XR>

The self-driving vehicle 1420 may be implemented as a mobile robot, a vehicle, an unmanned aerial vehicle, or the like by applying the PCC technology and the XR technology.

The self-driving vehicle 1420 to which the XR/PCC technology is applied may represent a self-driving vehicle provided with means for providing an XR image, or a self-driving vehicle that is a target of control/interaction in the XR image. In particular, the self-driving vehicle 1420 which is a target of control/interaction in the XR image may be distinguished from the XR device 1430 and may be operatively connected thereto.

The self-driving vehicle 1420 having means for providing an XR/PCC image may acquire sensor information from sensors including a camera, and output the generated XR/PCC image based on the acquired sensor information. For example, the self-driving vehicle 1420 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

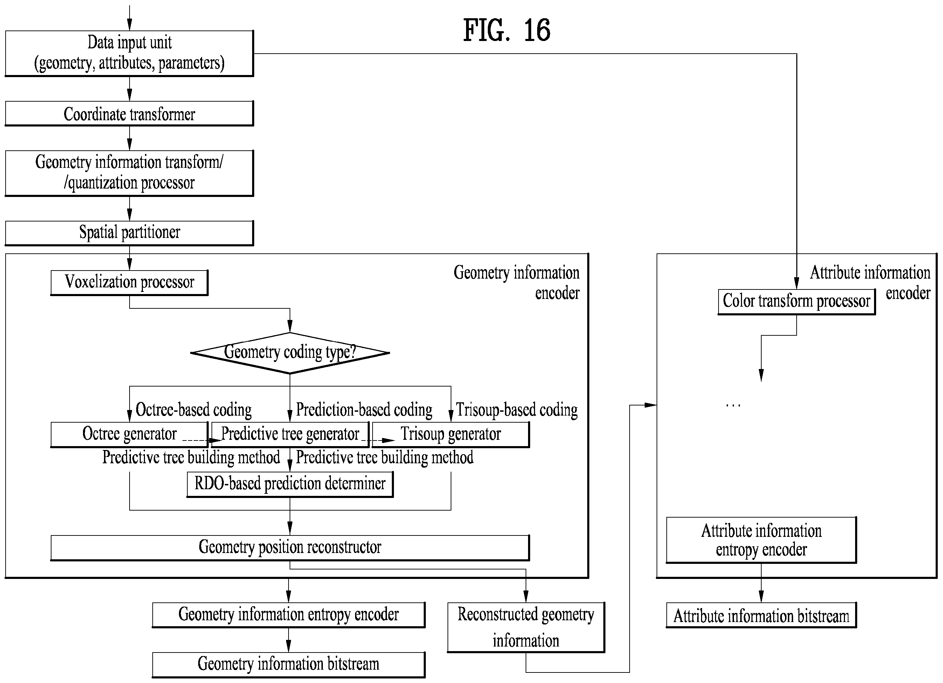

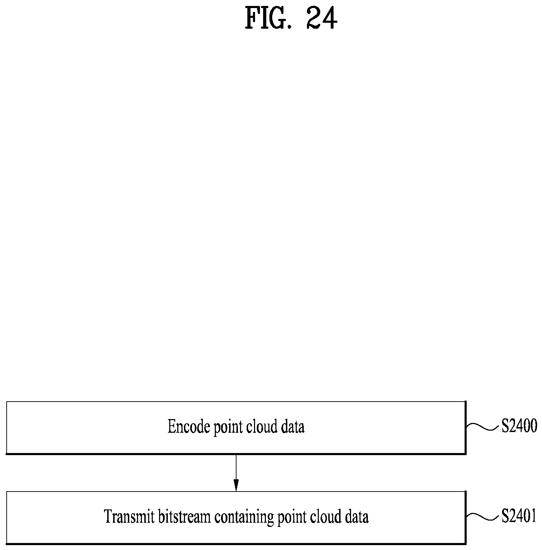

The point cloud data transmission method/device according to embodiments is construed as a term referring to the transmission device 10000, point cloud video encoder 10002, and transmitter 10003 of FIG. 1, the acquisition 20000/encoding 20001/transmission 20002 of FIG. 2, the encoder of FIG. 4, the transmission device of FIG. 12, the device of FIG. 14, the encoder of FIG. 16, the transmission method of FIG. 24, and the like.

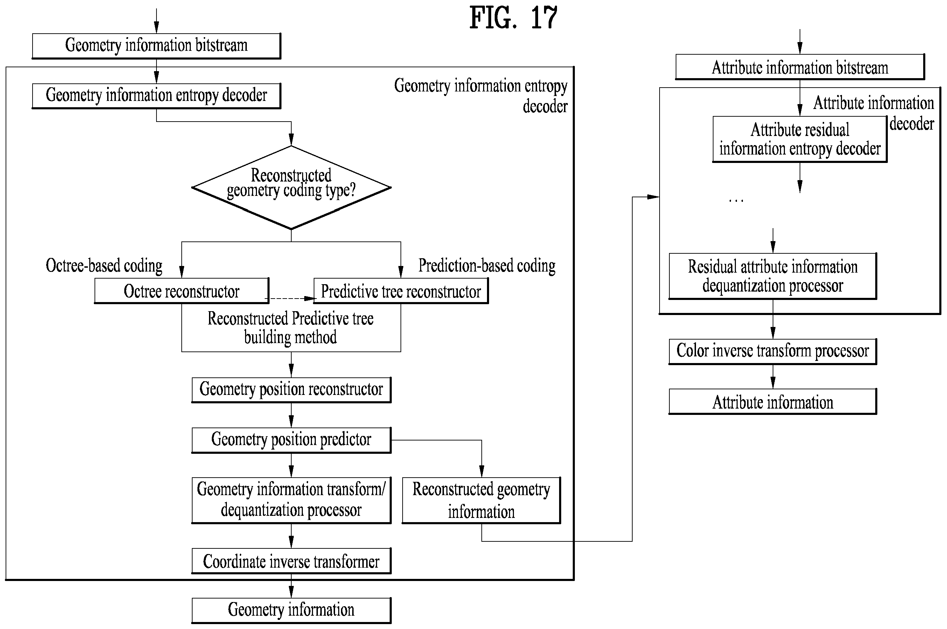

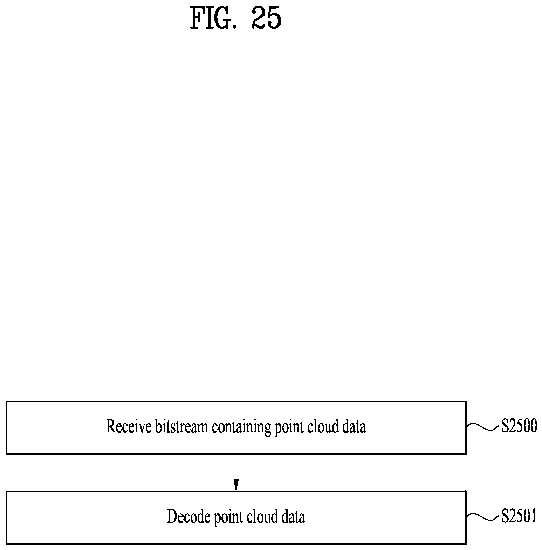

The point cloud data reception method/device according to embodiments is construed as a term referring to the reception device 10004, receiver 10005, and point cloud video decoder 10006 of FIG. 1, the transmission 20002/decoding 20003/rendering 20004 of FIG. 2, the decoder of FIGS. 10 and 11, the reception device of FIG. 13, the device of FIG. 14, the decoder of FIG. 17, the decoding of FIG. 37, and the reception method of FIG. 25, and the like.

The point cloud data transmission/reception method/device according to the embodiments may be referred to as a method/device according to the embodiments.

According to embodiments, geometry data, geometry information, position information, and the like constituting the point cloud data are construed as having the same meaning. Attribute data, attribute information, and the like constituting point cloud data are construed as having the same meaning.

Methods/devices according to embodiments provide a predictive tree building method for inter-prediction.

For example, when point cloud data from LiDAR is captured and transmitted in real time, or when 3D nap data needs to be received and processed in real time, the methods/devices according to embodiments may efficiently compress and reconstruct the point cloud data.

Embodiments include a a predictive tree building method for inter-prediction compression to increase the compression efficiency of predictive tree-based coding of geometry information that is applicable in geometry compression in geometry-based point cloud compression (G-PCC) of cloud content requiring low-latency coding. For example, embodiments include the following methods: a predictive tree building method and/or signaling method for inter-prediction. Each operation will be described with reference to the respective drawings.

Embodiments relate to methods for increasing compression efficiency of geometry-based point cloud compression (G-PCC) for compressing three-dimensional point cloud data.

Hereinafter, an encoder or an encoding device is referred to as an encoder, and a decoder or a decoding device is referred to as a decoder.

A point cloud is composed of a set of points, and each of the points may have geometry information and attribute information. The geometry information is three-dimensional position (XYZ) information, and the attribute information is values of a color (RGB, YUV, etc.) and/or reflectance.

In the G-PCC encoding process, the point cloud may be divided into tiles according to regions, and each tile may be divided into slices for parallel processing. The G-PCC encoding process may include compressing geometry slice by slice and compressing the attribute information based on the geometry reconstructed with position information changed through compression (reconstructed geometry = decoded geometry).

The G-PCC decoding operation includes receiving an encoded slice-based geometry bitstream and attribute bitstream, decoding geometry, and decoding attribute information based on the geometry reconstructed through the decoding operation.

An octree-based, predictive tree-based, or trisoup-based compression technique may be used to compress the geometry information.

Embodiments include a predictive tree-based geometry inter-compression technique to support low-latency geometry compression.

Examples of point cloud services requiring low latency may include real-time navigation using 3D map point clouds, or a case where point clouds need to be captured, compressed, and transmitted in real-time using LiDAR equipment.

To improve the methods for the encoder and decoder for low-latency services, an ability to start compression on a portion of the point cloud data first may be needed. The octree-based geometry coding scheme scans and code points in a breadth-first fashion. On the other hand, the prediction tree-based geometry compression technique targeting low-latency geometry compression uses a depth-first approach to reduce the need for stepwise point scanning as much as possible, and may generate a predicted value based on the geometry information between a parent node and child nodes in the tree and entropy-codes the residual to configure a geometry bitstream. The depth-first approach may not require stepwise scanning of all points, and may thus allow geometry coding of progressively captured point cloud data without waiting for all data to be captured.

However, the predictive tree-based geometry compression technique only includes intra-prediction, which may need to be extended to inter-prediction. Inter-prediction may reduce bitstream size based on a correlation between frames.

Embodiments are intended to to support inter-prediction compression techniques with a reference frame for point clouds captured by LiDAR and having multiple frames. A modification to the predictive tree generation/reconstruction method is proposed for inter-prediction compression. The compression rate may be increased by using the reference frame.

Embodiments may be modified and combined. The terms used in this document may be understood based on the intended meaning of the terms within the scope widely used in the related art. The predictive tree may be generated by the PCC encoder and reconstructed by the PCC decoder.

A method/device according to embodiments may include and perform global/local motion estimation and compensation.

For inter-frame prediction, the global motion between frames may be estimated and the content split into largest prediction units (LPUs) may be further split into PUs. The PU splitting operation may include applying global motion, checking, when the result of the application does not match the current frame, whether local motion is present, splitting into PUs, and finding a local motion. Global motion compensation may or may not be performed by predicting RDO per LPU. RDO may be predicted for each PU to determine whether to apply global motion compensation or local motion compensation.

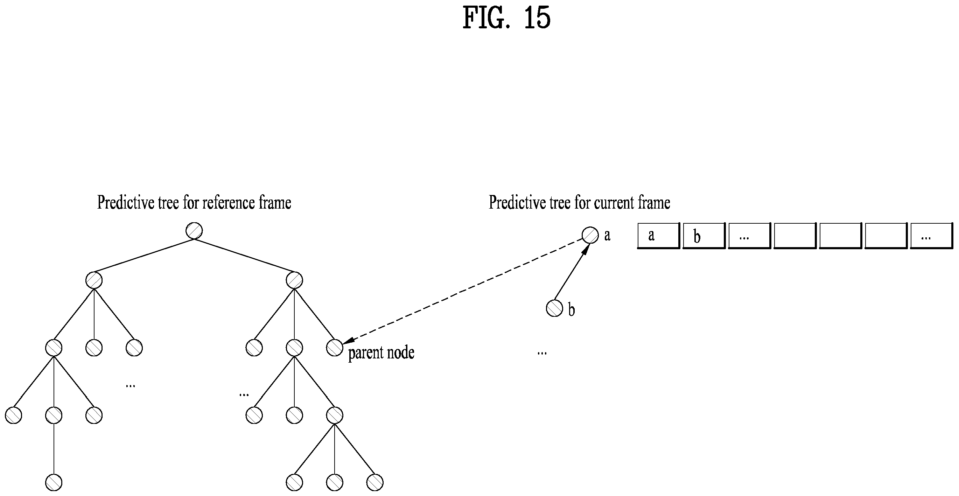

FIG. 15 illustrates generating an integrated prediction tree according to embodiments.

The point cloud data transmission method/device according to the embodiments (i.e., the transmission device 10000, point cloud video encoder 10002, and transmitter 10003 of FIG. 1, the acquisition 20000-encoding 20001-transmission 20002 of FIG. 2, the encoder of FIG. 4, the transmission device of FIG. 12, the device of FIG. 14, the encoder of FIG. 16, and the transmission method of FIG. 24) may generate a predictive tree as shown of FIG. 15 and compress the point cloud data based on the predictive tree.

The point cloud data reception method/device according to the embodiments (i.e., the reception device 10004, receiver 10005, and point cloud video decoder 10006 of FIG. 1, the transmission 20002-decoding 20003-renderign 20004 of FIG. 2, the decoder in FIGS. 10 and 11, the reception device of FIG. 13, the device of FIG. 14, the decoder of FIG. 17, and the reception method of FIG. 25) may generate a predictive tree as shown of FIG. 15 and reconstruct the point cloud data based on the predictive tree.

The methods/devices according to the embodiments may include and perform the operation of generating a predictive tree.

The methods/devices according to the embodiments may perform global/local motion compensation with respect to a reference frame and generate a predictive tree. As an extension of generating a predictive tree based on a current frame, an inter-predictive tree may be generated based on the reference frame and the current frame. An integrated predictive tree according to embodiments may be referred to as a predictive tree for short.

The integrated predictive tree according to embodiments may be generated in the following order.

To describe the generation order, the following conditions may be established. The conditions are exemplary, and the configuration may vary according to embodiments.

For example, the maximum number of child nodes in the inter predictive tree may be MaxNumChildrenForInter. Each node may have a parent, children, mode, and inter_reference_flag information. That is, each node (or one or more points) may have the same or different parent, children, mode, and inter_reference flag. The inter_reference flag may indicate whether the predictive tree for the reference frame is used for inter-prediction. A parent may be referred to as a parent node, and a child may be referred to as a child nodes.

In S1500, a method/device according to embodiments may register a first point as a start node (=a) based on the sorted (or input) order in the current frame.

In S1501, a parent may be found from a predictive tree generated based on the RDO in the reference frame, and be registered

In S1501-1, three nodes that are close to node a may be searched for and the closest node that has less than the maximum number of children (MaxNumChildrenForInter) may be registered as a parent.

In S1501-2, for node a, inter_reference_flag = 1 may be set.

In S1501-3, node a may be added to the predictive tree based on the found parent.

In S1502, the parent of the next point may be founed from the current integrated predictive tree and registered.

In S1502-1, three nodes close to the node may be found and the closest node having child nodes fewer than than MaxNumChildrenForInter may be registered as the parent.

In S1502-2, when the node set as the parent is present in the reference frame, inter_reference flag may be set to 1.

In S1502-3, S1502 may be repeated until all points in the current frame are registered in the predictive tree.

In S1503, when the integrated predictive tree is complete, a mode may be selected for the nodes registered with points belonging to the current frame according to the RDO.

In S1504, the first start node may be encoded as the root, and the inter_reference_flag of each node may be signaled.

Through the process described above, predictive trees for inter-prediction may be generated from the current frame and the reference frame.

Referring to FIG. 15, an example of generating an (integrated) predictive tree based on the predictive tree for the points (nodes) included in the reference frame and the predictive tree for the points (nodes) included in the current frame is shown. To predict node a (followed by node b) for start of encoding/decoding in the current frame, the nearest neighbors of node a may be searched for in the vicinity of node a. The nearest neighbors may be searched for in the reference frame and/or the current frame. Among the candidate neighbors included in the reference frame, a candidate neighbor having the fewest child nodes may be set as the parent node of node a. Then, a predictive tree for node b, which is the next node, may be subsequently generated. To encode/decode node a, a residual, which is the difference between the predicted value of node a, the parent node, and the current node, may be encoded and transmitted. The residual may be summed to reconstruct node a.

A method/device according to embodiments may include, and may perform, a generation method using a reference predictive tree. The reference predictive tree and the current predictive tree may be used together.

The current predictive tree may be set according to a predictive tree building method, a node that matches the tree level and traverse order may be found in the reference predictive tree, and a virtual link may be connected.

The mode may be set by calculating the RDO based on points matched in the predictive tree generated in the current frame and the predictive tree generated in the reference frame. When the RDO of a node in the reference predictive tree indicates a better value, inter_reference flag may be set to True.

A method/device according to embodiments may include, and may perform, a predictive tree reconstruction method.

After motion compensation is performed based on a signaled indication of whether global/local motion is applied to the reference frame, the predictive tree may be reconstructed.

As an extension of reconstructing the predictive tree using the current frame, an inter-predictive tree may be reconstructed using the reference frame and the current frame.

A method/device according to embodiments may include and perform a method of reconstructing an integrated predictive tree.

When an integrated predictive tree is generated, the tree reconstruction may be performed in the following order.

To describe the generation sequence, the following conditions may be established. The conditions are exemplary, and the configuration may vary according to embodiments.

For example, the maximum number of child nodes in the inter predictive tree may be MaxNumChildrenForInter. Each node may have a parent, children, mode, and inter_reference_flag information. The inter_reference_flag may indicate whether the predictive tree for the reference frame is used for inter-prediction. A parent may be referred to as a parent node, and a child may be referred to as a child nodes.

In S15000, the method/device according to embodiments may decode the received first node information.

In S15000-1, the first node may be decoded as a root node.

In S15001, for subsequent child nodes, their parents may be found from a predictive tree generated in the reference frame when received inter_reference flag is True.

In S15001-1, when reference_flag =1, the parent may be found from the predictive tree decoded/reconstructed based on the RDO in the reference frame, and registered.

In S15001-2, when reference_flag =0, operations may be performed based on the parent in the predictive tree currently constructed by the decoding.

In S15002, point values may be restored based on the reconstructed predictive tree.

In S15003, S15001 to S15002 may be repeated until all points are decoded.

A method/device according to embodiments may include and perform a reconstruction method using a reference predictive tree.

The reference predictive tree and the current predictive tree may be used together.

The current predictive tree may be reconstructed according to a predictive tree building method, a node that matches the tree level and traverse order may be found in the reference predictive tree, and a virtual link may be connected.

When inter_reference flag is True, point values may be reconstructed according to the mode based on the node matched by the virtual link in the predictive tree generated in the reference frame.

FIG. 16 illustrates a point cloud data transmission device according to embodiments.

A method of transmitting point cloud data according to embodiments may be performed by the transmission device of FIG. 16. Each component of the transmission device may correspond to hardware, software, a processor, and/or a combination thereof.

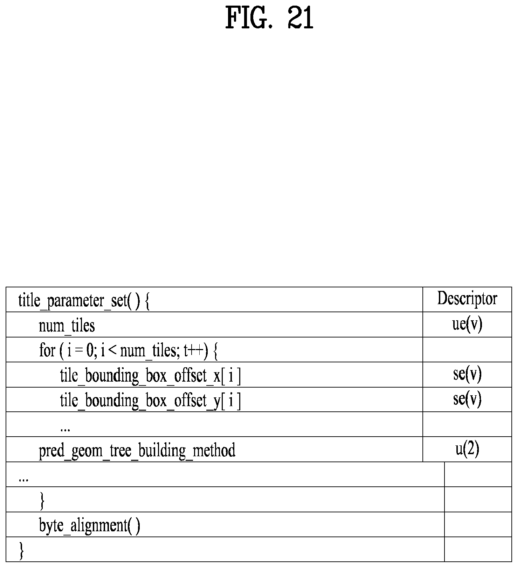

The point cloud data transmission device according to the embodiments of FIG. 21 corresponds to the transmission device 10000, the point cloud video encoder 10002, and the transmitter 10003 of FIG. 1, the acquisition 20000-encoding 20001-transmission 20002 of FIG. 2, the encoder of FIG. 4, the transmission device of FIG. 12, the device of FIG. 14, the transmission method of FIG. 24, and the like.

The operation of a PCC data encoder is described below with reference to FIG. 16. PCC data may be input to the encoder and encoded, and then a geometry information bitstream and an attribute information bitstream may be output.

A geometry information encoder according to embodiments may be configured as follows. Tree-related operations according to the embodiments may be performed by a predictive tree generation part (or processor) of the encoder.

The geometry information encoding part according to the embodiments may correspond to a point cloud video encoder, encoding, a point cloud encoder, and/or component(s) for encoding point cloud video in the transmitter.

When the geometry coding type is prediction-based coding, the geometry information encoding part (or geometry information encoder) may generate a predictive tree through the predictive tree generation part, and perform an RDO operation based on the generated predictive tree through a prediction determiner to select an optimal prediction mode. Geometry prediction values may be generated according to the optimal prediction mode.

The geometry information entropy encoding part (or geometry information entropy encoder) may configure a geometry information bitstream by entropy coding the residual values and the predicted values.

The predictive tree generation part (or predictive tree generator) may receive an input of a predictive tree building method, and may generate a predictive tree based on the input method. The predictive tree building method may be integrated predictive tree generation or generation using a reference predictive tree. It may be selected according to the content characteristics and the type of service. The applied predictive tree building method may be signaled to the decoder. The predictive tree may be configured according to the predictive tree building method.

Referring to FIG. 16, the data input unit may receive geometry (which may be referred to as geometry data, geometry information, position information, or the like), attributes (which may be referred to as attribute data, attribute information, or the like), and/or parameter information related to the geometry and attributes. The geometry/attributes may be acquired by an acquisition unit or a camera/sensor from a frame/sequence containing point cloud data, and the parameters may be set according to an encoder scheme.

The coordinate transformer may transform the coordinate settings of the data into a coordinate system for encoding because the geometry and/or attributes are represented based on positions (coordinates).

The geometry information transform/quantization processor may quantize the geometry information based on the quantization parameters.

The spatial partitioner may partition the space for encoding because the geometry and/or attributes are positioned in space.

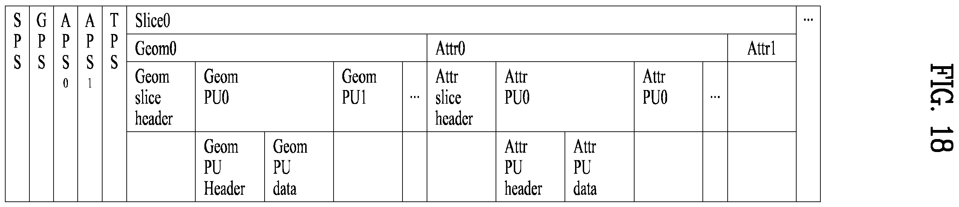

The geometry information encoder may voxelize the geometry through a voxelization processor. The geometry information encoder may check a geometry coding type. The coding type according to the embodiments may include octree-based coding, trisoup-based coding, and/or predictive tree-based coding. In the case of octree-based coding, an octree generator may generate an octree including geometry, reconstruct the geometry positions and deliver the reconstructed geometry information to an attribute information encoder, and encode the geometry information based on an entropy method to generate a bitstream containing the geometry information. In the case of trisoup-based coding, a predictive tree may be generated to encode the geometry nodes. The predictive tree building method according to embodiments may be set based on a parameter indicating the predictive tree building method. A parameter indicating the applied prediction tree building method may be generated and included in the bitstream to be delivered to the decoder. The parameters are described again with reference to FIG. 18. The attribute information encoder encodes the attributes based on the input data (geometry, attributes, and/or parameters) and/or the reconstructed geometry. Attributes, for example, color information, may be converted to a color system for encoding. For an attribute information encoding method, refer to the description of attribute encoding in FIG. 1. The attribute information is encoded based on an entropy method and a bitstream containing the attribute information is generated.

For details of each operation of FIG. 16, reference may be made to the description of the encoder herein.

FIG. 17 illustrates a point cloud data reception device according to embodiments.

A method of receiving point cloud data according to embodiments may be performed by the reception device of FIG. 17. Each component of the transmission device may correspond to hardware, software, a processor, and/or a combination thereof.

The point cloud data reception device according to the embodiments may correspond to the reception device 10004, the receiver 10005, the point cloud video decoder 10006 of FIG. 1, the transmission 20002-decoding 20003-rendering 20004 of FIG. 2, the decoder of FIGS. 10 and 11, the reception device of FIG. 13, the device of FIG. 14, the reception method of FIG. 25, and the like.

A PCC data decoder is described below with reference to FIG. 17. The decoder may receive as input an encoded geometry information bitstream and attribute information bitstream, and may output decoded and reconstructed PCC data.

The geometry information decoder according to the embodiments may be configured as follows. Tree-related operations according to embodiments may be performed by a predictive tree reconstruction part (or processor).

The geometry information decoder according to the embodiments may correspond to a point cloud video decoder, decoding, a point cloud decoder, and component(s) for decoding point cloud video in the receiver.

The predictive tree reconstruction part (or predictive tree reconstructor) may be used to receive a predictive tree building method from the transmitting side (encoder side), reconstruct the predictive tree according to the generation method, and decode the predicted value of the geometry.

As shown in FIG. 17, the reception method/device according to the embodiments (i.e., the point cloud data reception method/device, or the point cloud data decoder) may perform the decoding process of FIG. 17.

The reconstruction process of the predictive tree reconstruction part according to the embodiments may correspond to a reverse to the process of the predictive tree generator. The operations of the point cloud data transmission device and the reception device according to the embodiments may correspond to each other and may follow a reverse process to each other.

For details of each operation in FIG. 17, reference may be made to the description of the decoder herein.

FIG. 18 illustrates a bitstream containing point cloud data according to embodiments.

The point cloud data transmission device according to the embodiments (i.e., the transmission device 10000, the point cloud video encoder 10002, and the transmitter 10003 of FIG. 1, the acquisition 20000-encoding 20001-transmission 20002 of FIG. 2, the encoder of FIG. 4, the transmitter of FIG. 12, the device of FIG. 14, the transmission method of FIG. 24, and the like) may encode the point cloud data, generate parameter information, and generate and transmit a bitstream shown in FIG. 18.

The point cloud data reception device according to the embodiments (i.e., the reception device 10004, the receiver 10005, the point cloud video decoder 10006 in FIG. 1, the transmission 20002-decoding 20003-rendering 20004 in FIG. 2, the decoder in FIGS. 10 and 11, the reception device in FIG. 13, the device in FIG. 14, the reception method of FIG. 25, and the like) may receive a bitstream as shown in FIG. 18 and decode the point cloud data based on the parameter information.

To add/carry out embodiments, relevant information may be signaled. The signaling information according to the embodiments may be used at the transmitting end or the receiving end.

The encoded point cloud may be configured as described below. A point cloud data encoder that performs geometry encoding and/or attribute encoding may generate an encoded point cloud (or a bitstream containing the point cloud). In addition, signaling information related to the point cloud data may be generated and processed by a metadata processor of the point cloud data transmission device and included in the point cloud as described below.

Each abbreviation has the following meaning. Each abbreviation may be referred to by another term within the scope of the equivalent meaning. SPS: Sequence Parameter Set; GPS: Geometry Parameter Set; APS: Attribute Parameter Set; TPS: Tile Parameter Set; Geom: Geometry bitstream = geometry slice header + [geometry PU header + geometry PU data] | geometry slice data; Attr: Attribute bitstream = attribute data unit header + [attribute PU header + attribute PU data] | attribute data unit header.

Slices according to embodiments may be referred to as data units, or the like.

The option information related to the predictive tree generation according to embodiments may be added to the SPS or GPS and signaled. The option information related to the predictive tree generation according to the embodiments may be added to the TPS or to the geometry header for each slice and signaled. Tiles, or slices are provided to allow the point cloud to be divided into regions for processing.

When the point cloud data is partitioned into regions, an option for generating different sets of neighbor points for the respective regions may be configured to provide a selection method exhibiting low complexity and low reliability of results or a selection method exhibiting high complexity and high reliability. The option may be configured differently according to the capacity of the receiver.

Thus, when a point cloud is divided into tiles, a different option may be applied to each tile. When a point cloud is divided into slices, a different option may be applied to each slice. Whether or not to perform reconstruction using a reference predictive tree for each point may be added to the Geometry Predtree data.

Hereafter, the syntax of the parameters included in the bitstream of FIG. 18 is described with reference to the respective drawings.

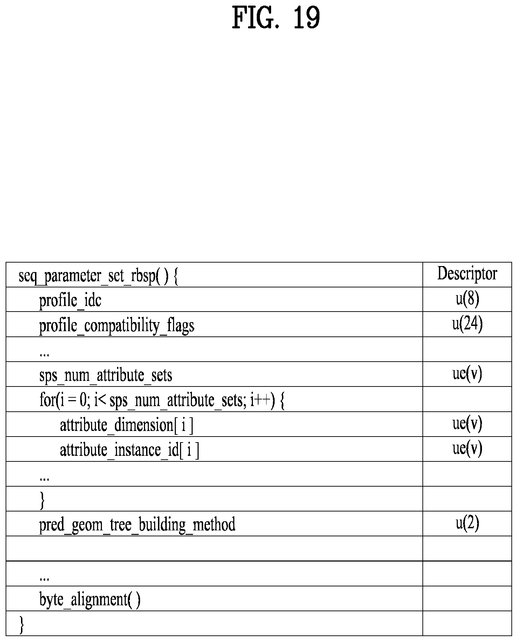

FIG. 19 shows a sequence parameter set according to embodiments.

The option information related to the predictive tree generation according to the embodiments may be added to the sequence parameter set and signaled. The information may be efficiently signaled for the predictive tree generation. The name of the signaling information may be understood within the scope of the meaning and function of the signaling information.

profile_idc indicates a profile to which the bitstream conforms. Bitstreams shall not contain values of profile_idc other than the specified values. Other values of profile_idc are reserved for future use by ISO/IEC.

profile_compatibility_flags equal to 1 indicates that the bitstream conforms to the profile indicated by profile_idc equal to j.

sps_num_attribute_sets indicates the number of coded attributes in the bitstream. The value of sps_num_attribute_sets may be in the range of 0 to 63.

attribute_dimension[ i ] indicates the number of components of the i-th attribute.

attribute_instance_id[ i ] indicates the instance ID for the i-th attribute.

pred_geom_tree_build_method: Indicates a method of building a predictive geometry tree in the sequence. For example, it may be represented as 0= build a predictive tree without a reference frame; 1= build an integrated predictive tree; 2= build a predictive tree using a reference predictive tree. The information according to each integer value may change.

The SPS according to embodiments may further include the following parameters.

simple_profile_compliant indicates whether the bitstream conforms to a simple profile (when equal to 1) or not (when equal to 0).

Dense_profile_compliant indicates whether the bitstream conforms to a dense profile (when equal to 1) or not (when equal to 0).

predictive_profile_compliant indicates whether the bitstream conforms to a predictive profile (when equal to 1) or not (when equal to 0).

main_profile_compliant indicates whether the bitstream conforms to the main profile (when equal to 1) or not (when equal to 0).

reserved_profile_18bits is equal to 0 in bitstreams conforming to this version of this document. Other values for reserved_profile_18bits are reserved for future use by ISO/IEC.

slice_reordering_constraint indicates whether the bitstream is sensitive (when equal to 1) or not (when equal to 0) to the reordering or removal of slices within the coded point cloud frame. If slices are reordered or removed when slice_reordering_constraint is equal to 1, the resulting bitstream may not be fully decoded.

unique_point_positions_constraint equal to 1 indicates that every point should have a unique position in each coded point cloud frame. unique_point_positions_constraint equal to 0 indicates that two or more points may have the same position in a coded point cloud frame.

Even when points in each slice have unique positions, points in different slices in the same frame may match each other. In this case, unique_point_positions_constraint is set to 0.

When unique_point_positions_constraint is equal to 1, points at the same position in the same frame are prohibited, even if they have different frame index/number attribute values.

level_idc indicates the level to which the bitstream conforms as specified in Annex A. The bitstream shall not contain any value of level_idc other than the values specified in Annex A. Other values of level_idc are reserved for future use by ISO/IEC.

sps_seq_parameter_set_id identifies the SPS for reference by other DUs. sps_seq_parameter_set_id shall be 0 in bitstreams that conform to this version of this document. Other values of sps_seq_parameter_set_id are reserved for future use by ISO/IEC.

frame_ctr_lsb_bits specifies the length of the syntax element frame_ctr_lsb in bits.

slice tag_bits specifies the length of the syntax element slice_tag in bits.

bypass_stream_enabled specifies whether a bypass bin for an arithmetic-coded syntax element is delivered in a separate data stream. When bypass_stream_enabled is equal to 1, the two data streams are multiplexed using a fixed-length chunk sequence (11.3). When bypass_stream_enabled is equal to 0, the bypass bin forms part of the arithmetic-coded bitstream.

entropy_continuation_enabled indicates whether the entropy syntax analysis of the DU can rely on the final entropy syntax state of the DU in the previous slice (when equal to 1) or not (when equal to 0). It is a requirement of bitstream conformance that entropy_continuation_enabled be 0 when slice_reordering_constraint is 0.

sps_extension_present indicates whether the syntax element sps_extension_data is present in the SPS syntax structure (when equal to 1) or not (when equal to 0). sps_extension_present is 0 in bitstreams that conform to this version of this document. The value of 1 for sps_extension_present is reserved for future use by ISO/IEC.

sps_extension_data may have any value. Its presence and value do not affect the decoder conformance to profiles specified in this version of this document.

seq_origin_bits indicates the length of each seq_origin_xyz syntax element, in bits, excluding the sign bit.

seq_origin_xyz[ $k$ ] and seq origin_log2_scale together indicate the XYZ origin of the sequence and coding coordinates per sequence coordinate system unit from the application-specific coordinate origin. When seq_origin_bits is 0, seq_origin_xyz[ $k$ ] and seq origin_log2_scale shall be inferred to be 0. The k-th XYZ component of the origin is specified by the expression SeqOrigin[ $k$ ].

seq_bbox_size_bits indicates the length of each syntax element seq_bbox_size_minus1_xyz in bits.

seq_bbox size_minus1_xyz[ $k$ ] plus 1 indicates the k-th XYZ component of the coded volume dimension in the sequence coordinate system. When seq_bbox_size_bits is 0, no coded volume dimension is specified.

seq_unit_numerator_minus1, seq_unit denominator_minus1, and seq_unit_is_metres together indicate the length represented by the unit vector of the sequence coordinate system.

seq_unit_is_metres equal to 1 indicates the length of the sequence unit vector.

seq_unit_is_metres equal to 0 indicates that the sequence unit vector has a length relative to the following application-specific coordinate system unit vector length AppUnit.

seq_coded_scale_exponent, seq_coded_scale_mantissa_bits, and seq_coded_scale_mantissa together indicate the scale factor that converts the coded coordinate system to the sequence coordinate system. The scale factor is indicated by a syntax element as a normalized binary floating point value greater than or equal to 1. seq_coded_scale_mantisssa_bits indicates the length of the syntax element seq_coded_scale_mantissa in bits. The scale factor is indicated by the expression SeqCodedScale.

geom_axis_order indicates the correspondence between the XYZ axes and the STV axes of the coded point cloud.

num_attributes indicates the number of attributes listed by the SPS attribute list.

AttrDim, AttrBitDepth, and AttrMaxVal indicate the number of components, bit depth, and maximum value of the attribute identified by the variable AttrIdx, respectively.

$$AttrDim := attr\_components\_minus1[AttrIdx] + 1$$

$$AttrBitDepth := attr\_bitdepth\_minus1[AttrIdx] + 1$$

$$AttrMaxVal := Exp2(AttrBitDepth) - 1$$

_components_minus1[attrIdx] plus 1 specifies the number of components of the identified attribute.

Attributes with three or more components may only be coded with raw attribute data (attr_coding_type = 3).

attr _instance_id value may be used to distinguish between attributes with the same attribute label. For example, a point cloud may have multiple color attributes sampled from different viewpoints. In this case, the application may use attr_instance_id to distinguish between the viewpoints.

attr_bitdepth_minus1[ attrIdx ] plus 1 specifies the bit depth of all components of the identified attribute.

attr_label_known[ attrIdx ], attr_label[ attrIdx ], and attr_label_oid[ attrIdx ] together identify the type of data carried by the identified attribute. attr_label_known[ attrIdx ] specifies whether the attribute is an attribute specified in this document by the value of attr_label[ attrIdx ] (when equal to 0) or an externally specified attribute identified by the object identifier attr_label_oid[ attrIdx ].

The types of attributes identified by attr_label are specified in Table 9. It is a requirement of bitstream conformance that the attribute identified by attr_label should have components only as many as specified as valid. Unspecified values of attr_label are reserved for future use by ISO/IEC. The decoder should decode the attribute with a reserved value of attr_label.

The attribute type identified by attr_label_oid is not specified in this document.

attr_property_cnt indicates the number of attribute_property syntax structures in the SPS for the property.

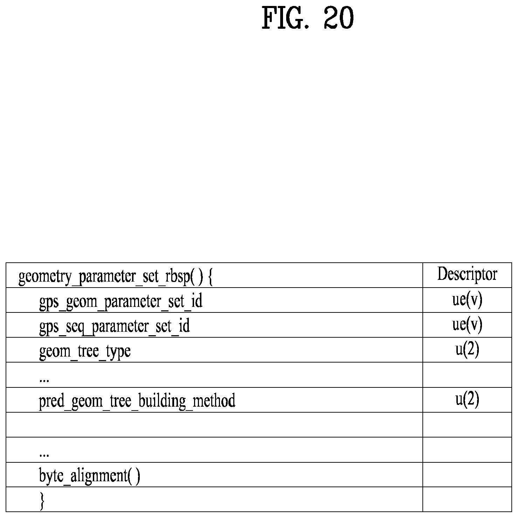

FIG. 20 shows a geometry parameter set according to embodiments.

During the geometry information encoding/decoding process, relevant option information for the predictive tree generation function may be added to the geometry parameter set to be signaled. It may be efficiently signaled to support inter-prediction of the geometry. The name of the signaling information may be understood within the scope of the meaning and function of the signaling information.

gps_geom_parameter_set_id: Indicates an identifier for the GPS for reference by other syntax elements. The value of gps_seq_parameter_set_id may be in the range of 0 to 15.

gps_seq_parameter_set_id: Indicates the value of sps_seq_parameter_set_id for the active SPS. The value of gps_seq_parameter_set_id may be in the range of 0 to 15.

geom_tree_type: geom_tree_type equal to 0 indicates that the position information is coded using an octree. geom_tree_type equal to 1 indicates that position information is coded using a predictive tree.

pred_geom_tree_build_method: Indicates a method of building a predictive geometry tree in the frame. For example, it may be signaled as 0= build a predictive tree without a reference frame; 1= build an integrated predictive tree; 2= build a predictive tree using a reference predictive tree. The information according to each integer value may change.

The GPS according to embodiments may further include the following parameters.

gps_geom_parameter_set_id identifies the GPS for reference by other DUs.

gps_seq_parameter_set_id identifies the active SPS with sps seq_parameter_set_id.

slice_geom_origin_scale_present indicates whether slice_geom origin_log2 scale is present (when equal to 1) or absent (when equal to 0) in the GDU header. slice_geom_origin_scale_present equal to 0 indicates that the slice origin scale is specified by gps_geom origin_log2 scale.

gps_geom origin_log2 scale indicates the scale factor used to derive the slice origin from slice_geom_origin_xyz when slice_geom_origin_scale_present is equal to 0.

geom_dup_point_counts_enabled indicates whether duplicate points may be signaled in the GDU by duplicate counts per point (when equal to 1) or not (when equal to 0).

geom_dup_point_counts_enabled equal to 0 does not prohibit coding the same point position multiple times within a single slice by means other than the syntax element direct_dup_point_cnt, occ_dup_point_cnt, or ptn_dup_point_cnt.

geom_tree_type equal to 0 indicates that the slice geometry is coded using an occupancy tree (7.3.3.4). geom_tree_type equal to 1 indicates that the slice geometry is coded using a predictive tree (7.3.3.8).

gps_extension_present indicates whether the syntax element gps_extension_data is present (when equal to 1) or absent (when equal to 0) in the GPS syntax structure. gps_extension_present is 0 in bitstreams that conform to this version of this document. The value of 1 for gps_extension_present is reserved for future use by ISO/IEC.

gps_extension_ may have any value. Its presence and value do not affect the decoder conformance to profiles specified in this version of this document.

geom_angular_enabled indicates that slice geometry is coded (when equal to 1) or not (when equal to 0) based on information about a beam set positioned and rotated along the V axis of the angle origin. When geom_angular_enabled is enabled, point positions are assumed to be sampled along the rays projected by the beams.

slice angular origin_present indicates that the slice-related angular origin is signaled in the GDU header (when equal to 1) or not (when equal to 0). slice angular origin_present equal to 0 indicates that the angular origin is gps angular origin_>cyz. When not present, slice angular origin_present is inferred to be 0.

gps_angular_origin_bits_minus1 plus 1 indicates the length of each syntax element gps angular origin_>cyz in bits.

gps_angular_origin_xyz[$k$] indicates the -th XYZ coordinate of the angular origin in the coding coordinate system.

num_beams_minus1 plus 1 indicates the number of beams listed by the GPS.

beam_elevation_init and beam_elevation_diff[i] together indicate the beam elevation as a slope above the S-T plane. The elevation slope of the -th beam is indicated by the expression BeamElev[i]. It is a binary fixed-point value with 18 decimal bits.

beam_voffset_init and beam_voffset_diff[i] together indicate the V-axis offset of the listed beams from the angular origin. The offset is specified in units of the coding coordinate system. The offset of the -th beam is specified by the expression BeamOffsetV[$i$].

beam_steps_per_rotation_init_minus1 and beam_steps_per_rotation_diff[i] indicate the number of steps taken per rotation by the rotating beam. The value for the -th beam is specified by the expression BeamStepsPerRev[i].

ptree_ang_azimuth_pi_bits_minus11 plus 11 indicates the number of bits indicating half a rotation of the beam around the V axis. Half the rotation is $\pi$ radians.

ptree ang_radius_scale_log2 indicates the factor used to scale the radial angular coordinates of a point during the transformation to Cartesian coordinates.

ptree_ang_azimuth_step_minus1 plus 1 indicates the expected change in azimuth of a beam rotating between the coded points. The azimuth prediction residual used for coding the angle prediction tree may be coded as a multiple of ptree_ang_azimuth_step_minus1 + 1 and the remainder.

occtree_point_cnt_list_present indicates that the GDU footer lists the number of points at each occupancy tree level (when equal to 1) or not (when equal to 0). When not present, occtree_point_cnt_list_present is inferred to be 0.

occtree_direct_coding_mode greater than 0 indicates that the point position may be coded by an appropriate direct node in the occupancy tree. occtree_direct_coding_mode equal to 0 indicates that the direct node should not be present in the occupancy tree.

As the value of occtree_direct_coding_mode increases, the rate of direct node qualification generally increases.

occtree_direct_joint_coding_enabled indicates that a direct node for coding two points should jointly code positions (when equal to 1) or not (when equal to 0) according to a specific ordering of the points.

occtree coded axis_list_present equal to 1 indicates that the GDU header contains the syntax element occtree_coded_axis, which is used to derive the node size for each occupancy tree level. occtree_coded_axis_list_present equal to 0 indicates that the syntax element occtree_coded_axis is not present in the GDU syntax and that the occupancy tree indicates a three-dimensional volume specified by the tree depth.

occtree_neigh window_log2_minus1 plus 1 indicates the number of occupancy tree node positions that form each availability window within the tree level. Nodes outside the window are not available in processes related to the nodes within the window. occtree_neigh_window_log2_minus1 equal to 0 indicates that only sibling nodes should be considered available to the current node.

occtree_adjacent_child_enabled indicates that an adjacent child of the adjacent occupancy tree node is used for bit occupancy contextualization (when equal to 1) or not (when equal to 0). When not present, occtree_adjacent_child_enabled is inferred to be 0.

occtree_intra_pred_max_nodesize_log2 minus 1 indicates the maximum size of occupancy tree nodes suitable for in-slice occupancy prediction. When not present, occtree_intra_pred_max_nodesize_log2 is inferred to be 0.

occtree_bitwise_coding indicates that the node occupancy bitmap is coded using a syntax element occupancy_bit (when equal to 1) or using a pre-coded syntax element occupancy_byte (when equal to 0).

occtree_planar_enabled indicates that the coding of the node occupancy bitmap is performed partially by signaling of occupied and unoccupied planes (when equal to 1) or not (when equal to 0). When not present, occtree_planar_enabled is inferred to be 0.

occtree_planar_threshold[i] indicates the threshold used in part to determine axis-specific suitability for planar occupancy coding. The threshold is expressed from the most likely planar axis (i = 0) to the least likely (i = 2). Each threshold value represents the minimum likelihood of an eligible axis for which occ_single_plane is expected to be 1. The range [8, 120 ] for occtree_planar_threshold corresponds to the likelihood interval [0, 1).

When present, occtree_direct_node_rate_minus1 indicates that only occtree_direct_node_rate_minus1 + 1 nodes out of all 32 eligible nodes may be coded as direct nodes.

occtree_planar_buffer disabled indicates that contextualization of per-node occupied planar positions using planar positions of previously coded nodes should be disabled (when equal to 1) or not (when equal to 0). When not present, occtree_planar_buffer disabled is inferred to be 0.

geom_scaling_enabled indicates that the coded geometry should be scaled (when equal to 1) or not (when equal to 0) in the geometry decoding process.

geom_qp indicates the geometry QP before adding an offset per slice and per node.

geom_qp_mul_log2 indicates the scaling factor to apply to the geometry QP. Exp2(3 - geom_qp_mul_log2) QP values are given every time the scaling step size is doubled.

ptree_qp_period_log2 indicates the period at which the predictive tree node QP offset is signaled. The period is one for all Exp2(ptree_qp_period_log2) nodes.

occtree direct_node_qp offset indicates the offset relative to the slice geometry QP for scaling direct node coded point positions.

FIG. 21 shows a tile parameter set according to embodiments.

The option information related to the predictive tree generation according to the embodiments may be added to the tile parameter set and signaled. This allows for efficient signaling of inter-prediction. The name of the signaling information may be understood within the scope of the meaning and function of the signaling information.

num_tiles indicates the number of tiles signaled for the bitstream. When not present, num_tiles is inferred to be zero.

tile_bounding_box_offset_x[i] indicates the x offset of the i-th tile in Cartesian coordinates. When not present, the value of tile_bounding_box offset x[0] is inferred to be sps_bounding_box_offset_x.

tile_bounding_box_offset_y[i] indicates the y offset of the i-th tile in the Cartesian coordinates. When not present, the value of tile_bounding_box offset_y[0] is inferred to be sps_bounding_box_offset_y.

pred_geom_tree_build_method: Indicates a method of building a predictive geometry tree in the tile. For example, it may be represented as 0= build a predictive tree without a reference frame; 1= build an integrated predictive tree; 2= build a predictive tree using a reference predictive tree. The information represented by each integer value may change.

The tile parameter set according to embodiments may further include the following parameters. The tile parameter set may be referred to as a tile inventory.

ti_seq_parameter_set_id indicates an active SPS with sps seq_parameter_set_id.

ti_frame_ctr_lsb_bits indicates the length of the syntax element ti_frame_ctr_lsb in bits. The ti_frame_ctr_lsb_bits may be the same as the frame_ctr_lsb_bits of the active SPS.

ti_frame_ctr_lsb may be the ti_frame_ctr_lsb_bits LSB of FrameCtr for the next coded point cloud frame.

tile_cnt indicates the number of tiles listed by the tile inventory.

tile_id_bits indicates the length of each syntax element tile_id in bits. tile_id_bits equal to 0 indicates that the tile should be identified by index tileIdx.

tile_origin_bits_minus1 plus 1 indicates the length of each syntax element tile_origin_xyz in bits, excluding the sign bit.

tile_size_bits_minus1 plus 1 indicates the length of each syntax element tile_size_minus1_xyz in bits.

tile_id[ tileIdx ] indicates the identifier of the tileIdx-th tile in the tile inventory. When tile_id_bits is 0, the value of tile_id[ tileIdx ] is inferred to be tileIdx. Every value of tile_id may be unique in the tile inventory.

tile origin_>cyz[tileId][k] and tile_size_minus1_xyz[ tileId ][ k ] indicate the bounding box in the sequence coordinate system containing the slice identified by the slice_tag equal to tileId.

tile_origin_xyz[tileId][k]) indicate the k-th XYZ coordinate of the bottom corner of the tile bounding box with respect to the tile inventory origin.

tile_size_minus1_xyz[tileId][k] plus 1 indicates the k-th XYZ dimension of the tile bounding box.

ti_origin_bits_minus1 plus 1 indicates the length of each syntax element ti_origin_xyz in bits, excluding the sign bit.

ti_origin_xyz[k] and ti origin_log2_scale together indicate the XYZ origin of the sequence coordinate system specified by seq_origin_xyz[k] and seq_origin_log2 scale. The values of ti_origin_xyz[k] and ti_origin_log2_scale may be the same as seq_origin_xyz[k] and seq_origin_log2_scale, respectively.

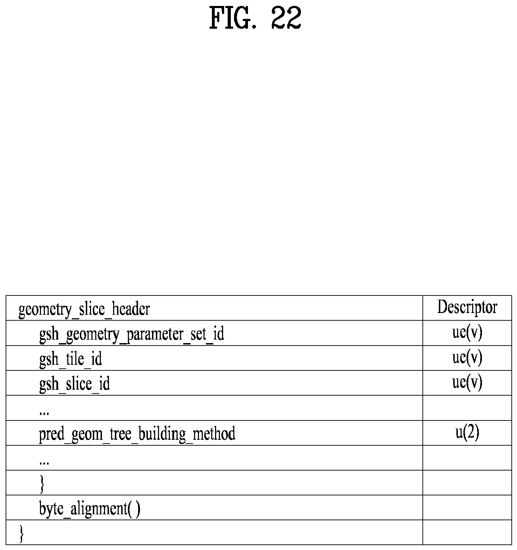

FIG. 22 shows a geometry slice header according to embodiments.

During the geometry information encoding/decoding process, relevant option information for the predictive tree generation function may be added to the geometry slice header to be signaled. It may be efficiently signaled to support inter-prediction. The name of the signaling information may be understood within the scope of the meaning and function of the signaling information.

gsh_geometry_parameter set_id indicates the value of gps_geom_parameter_set_id of the active GPS.

gsh_tile_id specifies the value of the tile ID that is referred to by the GSH. The value of gsh_tile_id may be in the range of 0 to XX, inclusive

gsh_slice_id identifies the slice header for reference by other syntax elements. The value of gsh_slice_id may be in the range of 0 to XX, inclusive.

pred_geom_tree_build_method: Indicates a method of building a predictive geometry tree in the slice. For example, it may be signaled as 0= build a predictive tree without a reference frame; 1= build an integrated predictive tree; 2= build a predictive tree using a reference predictive tree. Each integer value may change.

The geometry slice header may be referred to as a geometry data unit header. The geometry slice header may further include the following parameters

gdu_geometry_parameter_set_id indicates the active GPS with gps_geom_parameter_set_id.

slice_id indicates the slice to be referenced by other data units (DUs) (corresponding to slice units).

slice_tag identifies a slice as a member of a group of slices that have the same value for slice_tag. When there is a tile inventory DU, the slice group is a tile identified by the tile ID. Otherwise, when there is no tile inventory DU, the interpretation of slice_tag depends on the application.

frame_ctr_lsb specifies the LSB of frame_ctr_lsb_bits of the notional frame counter FrameCtr. Consecutive slices with different frame_ctr_lsb values form part of individual output point cloud frames. Consecutive slices with the same value of frame_ctr_lsb without intermediate frame boundary marker data units form part of the same coded point cloud frame.

slice_entropy_continuation equal to 1 indicates that the entropy syntax analysis state restoration process (11.6.2.2 and 11.6.3.2) shall be applied at the start of the GDU and the ADUs of the slice. slice_entropy_continuation equal to 0 specifies that the syntax analysis of the GDU and ADUs of the slice is independent of that of the other slices. When not present, slice_entropy_continuation is inferred to be 0.

When the GDU is the first GDU in the coded point cloud frame, it is a requirement of bitstream conformance that slice_entropy_continuation should be equal to 0. The decoder may ignore (remove from the bitstream and discard) any slice in a coded point cloud frame with slice_entropy_continuation equal to 1 that is not preceded by a slice with slice_entropy_continuation equal to 0 in the same frame.

The prev_slice_id should be the same as the GDU slice_id of the previous slice in the bitstream order. The decoder may ignore (remove from the bitstream and discard) slices that have prev_slice_id which are not equal to the slice_id of the previous slice in the same frame.

If slice_tag is not equal to the slice_tag of the GDU identified by prev_slice_id, it is recommended that slice_entropy_continuation be 0. For example, when the slice_tag is used to select a subset of slices, decoding may be prevented if there is a dependency on an unselected slice.

slice_geom_origin_bits_minus1 plus 1 specifies the length in bits of each syntax element slice_geom_origin_xyz.

slice_geom_origin_xyz[k] and slice_geom origin_log2 scale specify the k-th XYZ coordinate of the slice origin in the coding coordinate system. The slice origin in STV coordinates is specified by the expression SliceOrigin[k]. When not present, slice_geom_origin_log2_scale is inferred to be gps_geom origin_log2 scale.

slice_angular_origin_bits_minus1 plus 1 specifies the length in bits of each shintax element slice angular origin_>cyz.

slice angular origin_>cyz[k] specifies the k-th XYZ coordinate of the relative angular origin in the coordinate system of the slice. When not present, slice angular origin_>cyz[k] is inferred to be 0.

slice_geom_qp_offset specifies the slice geometry QP as an offset to the GPS geom_qp. When not present, slice_geom_qp_offset is inferred to be 0.

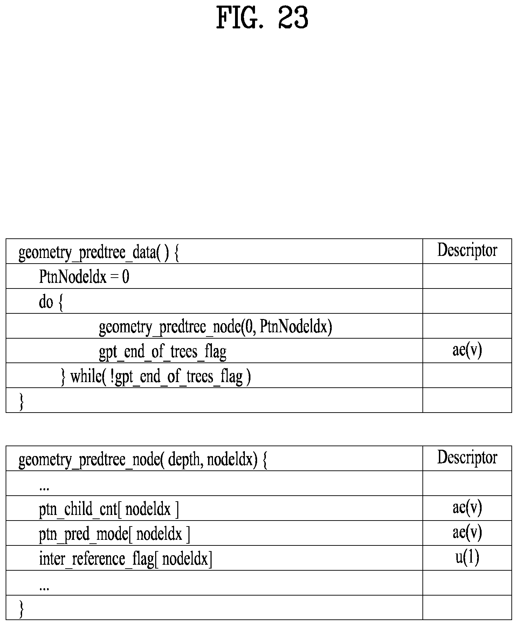

FIG. 23 shows geometry predictive tree data according to embodiments.

Whether or not to perform reconstruction using a reference predictive tree for each point may be signaled to the Geometry Predtree data. It may be signaled efficiently to support inter-prediction. The name of the signaling information may be understood within the scope of the meaning and function of the signaling information.

PtnNodeIdx: Indicates the node index.

gpt_end_of_trees_flag equal to 0 indicates that another predictive tree follows in the data unit. gpt_end_of_trees_flag equal to 1 indicates that no more predictive trees are present in the data unit.

ptn_child_cnt[nodeIdx] is the number of direct child nodes of the current predictive tree node in the geometry predictive tree.

ptn_pred_mode[nodeIdx] indicates a mode used to predict the position relative to the current node.

inter_reference flag [nodeIdx] indicates whether to reference information for reconstructing a point from the predictive tree generated through the reference frame.

FIG. 24 illustrates a point cloud data transmission method according to embodiments.

The point cloud data transmission method/device according to the embodiments (i.e., the transmission device 10000, point cloud video encoder 10002, and transmitter 10003 of FIG. 1, the acquisition 20000-encoding 20001-transmission 20002 of FIG. 2, the encoder of FIG. 4, the transmission device of FIG. 12, the device of FIG. 14, and the encoder of FIG. 16) may correspond to the method illustrated in FIG. 24.

The point cloud data transmission method according to the embodiments may include encoding point cloud data (S2400).

In the encoding operation according to the embodiments, point cloud data may be encoded as described with reference to FIGS. 1 to 14. Additionally, as described with reference to FIGS. 15 and 16, the point cloud data may be efficiently compressed by generating a predictive tree. The predictive tree according to the embodiments may include a predictive tree of a current frame, a predictive tree of a reference frame, and a predictive tree configured by integrating the predictive tree of the current frame and the predictive tree for the reference frame. As described with reference to FIGS. 18 to 23, a bitstream containing encoded point cloud data and related parameter information may be generated.

The point cloud data transmission method according to the embodiments may further include transmitting a bitstream containing the point cloud data (S2401).

In the transmission operation according to the embodiments, the encoded point cloud data may be transmitted as described with reference to FIGS. 1 to 14. As described with reference to FIGS. 15 and 16, a bitstream containing the point cloud data encoded based on the predictive tree may be transmitted. For the structure of the bitstream, refer to the description of FIGS. 18 to 23.

FIG. 25 illustrates a method of receiving point cloud data according to embodiments.

The point cloud data reception method/device according to the embodiments (i.e., the reception device 10004, receiver 10005, and point cloud video decoder 10006 of FIG. 1, the transmission 20002-decoding 20003-renderign 20004 of FIG. 2, the decoder in FIGS. 10 and 11, the reception device of FIG. 13, the device of FIG. 14, and the decoder of FIG. 17) may correspond to the method as illustrated in FIG. 25.

The point cloud data reception method according to the embodiments may include receiving a bitstream containing point cloud data (S2500).

As described with reference to FIGS. 1 to 14, in the reception operation according to the embodiments, a bitstream containing encoded point cloud data and parameters (FIGS. 18 to 23) may be received. As described with reference to FIGS. 15 and 17, the point cloud data encoded based on a predictive tree may be received.

The point cloud data reception method according to the embodiments may further include decoding the point cloud data (S2501).

In the decoding operation according to the embodiments, the point cloud data may be decoded as described with reference to FIGS. 1 to 14. As described with reference to FIGS. 15 and 17, a predictive tree may be generated, and the point cloud data may be decoded based on the predictive tree. The point cloud data contained in the bitstream of FIG. 18 may be decoded based on the parameter information of FIGS. 19 to 23.

Referring to FIG. 1, the point cloud data transmission method according to embodiments may include encoding point cloud data, and transmitting a bitstream containing the point cloud data.

Referring to FIG. 15, regarding global and local motion estimation and compensation, the encoding of the point cloud data may include inter-prediction between frames containing point cloud data, wherein the inter-prediction may include predicting global motion for the point cloud data based on a prediction unit, and partitioning the prediction unit, and predicting local motion for the point cloud data. Depending on a size and degree of partitioning, the prediction unit may include an LPU and a PU.

Referring to FIG. 15, regarding the predictive tree building method and the integrated predictive tree building method, the encoding method according to the embodiments may generate a integrated predictive tree using the predictive tree for the reference frame to predict the current point of the current frame. The encoding of the point cloud data may include generating a predictive tree related to the point cloud data. The generating the predictive tree may include finding, from a predictive tree for a reference frame for the current frame, a parent node for a point included in the current frame containing the point cloud data and registering the parent node in the predictive tree. Based on the number and distance of child nodes from at least one node included in the predictive tree for the reference frame, a parent node for a point included in the current frame may be generated. When prediction of the point included in the current frame is performed based on the reference frame, inter reference information may be generated. The parent node may be referred to as an upper node. A node may contain one or more points. A node may be referred to as a point. The predictive tree may include a predictive tree of the current frame, a predictive tree for the reference frame, and an integrated predictive tree of the current frame and the reference frame. The integrated predictive tree may be referred to as a predictive tree. The integrated predictive tree refers to a predictive tree generated from the predictive tree of the current frame and the predictive tree for the reference frame in order to encode the points of the current frame.

Referring to FIG. 15, regarding the predictive tree building method and the integrated predictive tree building method, the encoding method according to embodiments may include generating an integrated predictive tree in order to subsequently predict the next point after the current point. The generating of the predictive tree may further include registering, based on the predictive tree, a parent node for the next point included in the current frame containing the point cloud data. When the parent node for the next point is registered based on the reference frame, inter reference information may be generated. When the points (or nodes) in the current frame are, for example, a, b, and c, a may be the current point and b may be the next point.

Referring to FIG. 15, regarding the generation method by using a reference predictive tree, in the encoding of the point cloud data, a predictive tree for the current frame containing the point cloud data may be generated, and the parent node for a point contained in the current frame may be found based on the predictive tree for the current frame and the predictive tree for the reference frame for the current frame. Then, based on the distance between the nodes in the predictive tree for the current frame and the nodes in the predictive tree for the reference frame, the parent node may be searched for. When a node included in the predictive tree for the reference frame is designated as the parent node, a virtual link may be generated between the predictive tree for the current frame and the predictive tree for the reference frame, and inter reference information may be generated.

Referring to FIGS. 18 to 23, regarding the predictive geometry tree building method (pred_geom_tree_building_method) and inter reference information (inter_reference flag), the bitstream may include information about building a predictive tree.

The point cloud data transmission method is carried out by a transmission device. The transmission device may be an encoder including a memory and/or a processor. The transmission device may include an encoder configured to encode point cloud data, and a transmitter configured to transmit a bitstream containing the point cloud data.

The reception method corresponds to the point cloud data transmission method, and the reverse process may be performed in the method. The reception method may include receiving a bitstream containing point cloud data, and decoding the point cloud data.

Referring to FIG. 15, regarding the predictive tree reconstruction and motion compensation, the decoding of the point cloud data may include performing motion compensation for the point cloud data based on parameter information contained in the bitstream, and reconstructing a predictive tree for the point cloud data.

Referring to FIG. 15, regarding the integrated predictive tree reconstruction method and inter reference information (reference_flag = 1 or 0), the decoding of the point cloud data may include, based on the inter reference information contained in the bitstream, searching for a parent node for a point included in the current frame containing point cloud data from a predictive tree for a reference frame for the current frame or from a predictive tree for the current frame.

Referring to FIG. 15, regarding the reconstruction method using the reference predictive tree, the decoding of the point cloud data may include reconstructing the predictive tree for the current frame containing the point cloud data, searching for the parent node for a point included in the current frame based on the predictive tree for the current frame and the predictive tree for the reference frame for the current frame, and searching for the parent node based on the distance between a node included in the predictive tree for the current frame and a node included in the predictive tree for the reference frame. When the node included in the predictive tree for the reference frame is designated as the parent node, a virtual link may be generated between the predictive tree for the current frame and the predictive tree for the reference frame.

The reception method may be carried out by a reception device. The reception device may include a memory and/or a decoder including a processor. The reception device may include a receiver configured to receive a bitstream containing point cloud data; and a decoder configured to decode the point cloud data.

In generating a predictive tree, a point close to the current point is found. According to embodiments, the predictive tree may be a predictive tree for inter-prediction, rather than a tree of the current frame or a tree of a reference frame. That is, the encoder and/or decoder according to the embodiments may generate a predictive tree in consideration of the correlation between all points, thereby enabling effective compression/decompression. The compression efficiency of geometry information compression techniques may be improved. It may efficiently support real-time point cloud data capture/compression/transmission/reconstruction/playback services.

The PCC encoding method, PCC decoding method, and signaling method of the above-described embodiments may provide the following effects. Encoding time and decoding time may need to be shortened for scenarios that require low-latency services. For example, point cloud data may need to be captured and transmitted in real time by LiDAR, or received 3D map data may need to be processed in real time. As a method for the shortening, even when the point cloud information is not fully provided, encoding may be started and streaming and decoding may be performed with only a portion of the point cloud. Thereby, latency may be lowered.

According to embodiments, to provide low-latency services, a predictive tree building method capable of reducing the latency of the geometry information compression technique of geometry-based point cloud compression (G-PCC) for compressing 3D point cloud data while maintaining the size of the bitstream, and a method for performing inter prediction based on the the predictive tree building method may be provided.

Accordingly, embodiments may provide point cloud content steams with the increased geometry compression efficiency of the G-PCC encoder/decoder for compressing 3D point cloud data.

The PCC encoder and/or PCC decoder according to embodiments may provide an efficient predictive tree building method and may increase geometry compression coding/decoding efficiency by considering the correlation between frames.

The operations of the transmission device and reception device according to the above-described embodiments may be described in combination with the point cloud compression processing process below.

Therefore, the transmission method/device according to embodiments may efficiently compress and transmit point cloud data, and transmit signaling information for the same, and the reception method/device according to embodiments may efficiently decode/reconstruct the point cloud data.

Embodiments have been described in terms of a method and/or a device, and the description of the method and the description of the device may be applied complementary to each other.

Although the accompanying drawings have been described separately for simplicity, it is possible to design new embodiments by combining the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In the present disclosure, "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to perform the related operation or interpret the related definition according to a specific condition when the specific condition is satisfied.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

[Mode for Disclosure]

As described above, related details have been described in the best mode for carrying out the embodiments.

[Industrial Applicability]

As described above, the embodiments are fully or partially applicable to a point cloud data transmission/reception device and system.

Those skilled in the art may change or modify the embodiments in various ways within the scope of the embodiments.

Embodiments may include variations/modifications within the scope of the claims and their equivalents.

**Claims**

1. A method of transmitting point cloud data, the method comprising:

    encoding point cloud data; and
    transmitting a bitstream containing the point cloud data.

2. The method of claim 1, wherein the encoding of the point cloud data comprises:
   performing inter-prediction between frames containing the point cloud data, wherein the inter-prediction comprises:

    predicting a global motion for the point cloud data based on a prediction unit; and
    partitioning the prediction unit and predicting a local motion for the point cloud data.

3. The method of claim 1, wherein the encoding of the point cloud data comprises:

    generating a predictive tree related to the point cloud data,
    wherein the generating of the predictive tree comprises:

        searching for a parent node for a point included in a current frame containing the point cloud data from a predictive tree for a reference frame for the current frame and registering the same in the predictive tree, wherein the parent node for the point included in the current frame is generated based on a number and distance of child nodes from one or more nodes included in the predictive tree for the reference frame, wherein, based on prediction being performed on the point included in the current frame based on the reference frame, inter reference information is generated.

4. The method of claim 3, wherein the generating of the predictive tree further comprises:

    registering a parent node for a next point included in the current frame containing the point cloud data based on the predictive tree,

wherein, based on the parent node for the next point being registered based on the reference frame, the inter reference information is generated.

5. The method of claim 1, wherein the encoding of the point cloud data comprises:

generating a predictive tree for a current frame containing the point cloud data;
searching for a parent node for a point included in the current frame based on the predictive tree for the current frame and a predictive tree for a reference frame for the current frame, wherein the parent node is searched for based on a distance between a node included in the predictive tree for the current frame and a node included in the predictive tree for the reference frame; and
based on that the node included in the predictive tree for the reference frame is designated as the parent node, generating a virtual link between the predictive tree for the current frame and the predictive tree for the reference frame and generating inter reference information.

6. The method of claim 1, wherein the bitstream contains information about generating a predictive tree.

7. A device for transmitting point cloud data, the device comprising:

an encoder configured to encode point cloud data; and
a transmitter configured to transmit a bitstream containing the point cloud data.

8. A method of receiving point cloud data, the method comprising:

receiving a bitstream containing point cloud data; and
decoding the point cloud data.

9. The method of claim 1, wherein the decoding of the point cloud data comprises:

performing motion compensation on the point cloud data based on parameter information contained in the bitstream; and
reconstructing a predictive tree for the point cloud data.

10. The method of claim 9, wherein the decoding of the point cloud data comprises:
based on inter reference information contained in the bitstream, searching for a parent node for a point included in a current frame containing the point cloud data from a predictive tree for a reference frame for the current frame or from a predictive tree for the current frame.

11. The method of claim 9, wherein the encoding of the point cloud data comprises:

reconstructing a predictive tree for a current frame containing the point cloud data;
searching for a parent node for a point included in the current frame based on the predictive tree for the current frame and a predictive tree for a reference frame for the current frame, wherein the parent node is searched for based on a distance between a node included in the predictive tree for the current frame and a node included in the predictive tree for the reference frame,
based on that the node included in the predictive tree for the reference frame is designated as the parent node, generating a virtual link between the predictive tree for the current frame and the predictive tree for the reference frame.

12. The method of claim 8, wherein the bitstream contains information about generating a predictive tree.

13. A device for receiving point cloud data, the device comprising:

a receiver configured to receive a bitstream containing point cloud data; and
a decoder configured to decode the point cloud data.

14. The device of claim 13, wherein the decoder is configured to:

perform motion compensation on the point cloud data based on parameter information contained in the bitstream; and

reconstruct a predictive tree for the point cloud data.

15. The device of claim 14, wherein the decoder is configured to:
based on inter reference information contained in the bitstream, search for a parent node for a point included in a current frame containing the point cloud data from a predictive tree for a reference frame for the current frame or from a predictive tree for the current frame.

# FIG. 1

EP 4 425 933 A1

FIG. 2

Acquisition (20000) → Ply file (-geometry, -attribute) → Encoding (20001) → Encoded (-geometry, -attribute bitstream) → Transmission (20002) → Decoding (20003) → Decoded (-geometry, -attribute) → Rendering (20004)

Feedback (20005)

Head orientation information, viewport information

FIG. 3

# FIG. 4

FIG. 5

FIG. 6

FIG. 7

$1 + 2 + 4 + 8 = 15$

FIG. 8

Level of details

# FIG. 9

| Original order | P0, P1, P2, P3, P4, P5, P6, P7, P8, P9 |
| --- | --- |
| LOD-based order | P0, P5, P4, P2 │ P1, P6, P3 │ P9, P8, P7 |

LOD0

LOD1

LOD2

FIG. 10

# FIG. 11

geomerty
bitstream

attributes
birsrteam

11000 — Arithmerix decode

Arithmerix decode — 11005

11001 — Synthesize
octree

Inverse quantize — 11006

11002 — synthesize surface
approximation

11007

11003 — Reconstruct
geometry

RAHT

Gnnerate
LOD — 11008

Inverse
lifring — 11009

11004 — Inverse transform
coordinates

Inverse transform colors — 11010

position

attributes

# FIG. 12

12000 — Data input unit        12007

Position values of points        Attribute values of points

Set value, etc.

12001 — Quantization processor    Metadata processor    Color transform processor — 12008

12002 — Voxelization processor    Attribute transform processor — 12009

12003 — Octree occupancy code generator    Prediction/lifting/RAHT transform processor — 12010

12004 — Surface model processor    Arithmetic coder — 12011

12005 — Intra/inter-coding processor

12006 — Arithmetic coder

Sharing reconstructed position values

12012 — Transmission processor

# FIG. 13

Receiver — 13000

Reception processor — 13001

Geometry bitstream          Attribute bitstream          13006

Set value, etc.

13002 — Arithmetic decoder

Metadata parser

Arithmetic decoder — 13007

13003 — Occupancy code-based octree reconstruction processor

Inverse quantization processor — 13008

13004 — Surface model processor (triangle reconstruction, up-sampling, voxelization)

Prediction /lifting/RAHT inverse transform processor — 13009

13005 — Inverse quantization processor

Color inverse transform processor — 13010

Sharing reconstructed position values

Renderer — 13011

# FIG. 14

# FIG. 15

Predictive tree for reference frame

Predictive tree for current frame

parent node

EP 4 425 933 A1

EP 4 425 933 A1

## FIG. 16

Data input unit
(geometry, attributes, parameters)

Coordinate transformer

Geometry information transform/
/quantization processor

Spatial partitioner

**Geometry information encoder**

Voxelization processor

Geometry coding type?

Octree-based coding  Prediction-based coding  Trisoup-based coding

Octree generator  Predictive tree generator  Trisoup generator

Predictive tree building method  Predictive tree building method

RDO-based prediction determiner

Geometry position reconstructor

Geometry information entropy encoder

Geometry information bitstream

Reconstructed geometry information

**Attribute information encoder**

Color transform processor

· · ·

Attribute information entropy encoder

Attribute information bitstream

## FIG. 17

FIG. 18

| S P S | G P S | A P S 0 | A P S 1 | T P S | Slice0 | | | | | | | | | ... |
|---|---|---|---|---|---|---|---|---|---|---|---|---|---|
| | | | | | Geom0 | | | | | Attr0 | | | Attr1 |
| | | | | | Geom slice header | Geom PU0 | | Geom PU1 | ... | Attr slice header | Attr PU0 | Attr PU0 | ... |
| | | | | | | Geom PU Header | Geom PU data | | | | Attr PU header | Attr PU data | |

# FIG. 19

| seq_parameter_set_rbsp( ) { | Descriptor |
|---|---|
| profile_idc | u(8) |
| profile_compatibility_flags | u(24) |
| ... | |
| sps_num_attribute_sets | ue(v) |
| for(i = 0; i< sps_num_attribute_sets; i++) { | |
| attribute_dimension[ i ] | ue(v) |
| attribute_instance_id[ i ] | ue(v) |
| ... | |
| } | |
| pred_geom_tree_building_method | u(2) |
| | |
| ... | |
| byte_alignment( ) | |
| } | |

# FIG. 20

| geometry_parameter_set_rbsp( ) { | Descriptor |
|---|---|
| gps_geom_parameter_set_id | ue(v) |
| gps_seq_parameter_set_id | ue(v) |
| geom_tree_type | u(2) |
| ... | |
| pred_geom_tree_building_method | u(2) |
| | |
| ... | |
| byte_alignment( ) | |
| } | |

# FIG. 21

| title_parameter_set( ) { | Descriptor |
|---|---|
| num_tiles | ue(v) |
| for ( i = 0; i < num_tiles; t++) { | |
| tile_bounding_box_offset_x[ i ] | se(v) |
| tile_bounding_box_offset_y[ i ] | se(v) |
| ... | |
| pred_geom_tree_building_method | u(2) |
| ... | |
| } | |
| byte_alignment( ) | |
| } | |

# FIG. 22

| geometry_slice_header | Descriptor |
|---|---|
| gsh_geometry_parameter_set_id | ue(v) |
| gsh_tile_id | ue(v) |
| gsh_slice_id | ue(v) |
| ... | |
| pred_geom_tree_building_method | u(2) |
| ... | |
| } | |
| byte_alignment( ) | |
| } | |

# FIG. 23

| geometry_predtree_data( ) { | Descriptor |
|---|---|
| PtnNodeIdx = 0 | |
| do { | |
| geometry_predtree_node(0, PtnNodeIdx) | |
| gpt_end_of_trees_flag | ae(v) |
| } while( !gpt_end_of_trees_flag ) | |
| } | |

| geometry_predtree_node( depth, nodeIdx) { | Descriptor |
|---|---|
| ... | |
| ptn_child_cnt[ nodeIdx ] | ae(v) |
| ptn_pred_mode[ nodeIdx ] | ae(v) |
| inter_reference_flag[ nodeIdx] | u(1) |
| ... | |
| } | |

# FIG. 24

| Encode point cloud data | ~ S2400 |

↓

| Transmit bitstream containing point cloud data | ~ S2401 |

# FIG. 25

| | |
|---|---|
| Receive bitstream containing point cloud data | ⌇ S2500 |

| | |
|---|---|
| Decode point cloud data | ⌇ S2501 |

<div align="center">

**INTERNATIONAL SEARCH REPORT**

</div>

| International application No. |
| --- |
| **PCT/KR2022/016413** |

**A.    CLASSIFICATION OF SUBJECT MATTER**

**H04N 19/96**(2014.01)i; **H04N 19/503**(2014.01)i; **H04N 19/70**(2014.01)i; **H04N 19/597**(2014.01)i; **H04N 19/105**(2014.01)i

According to International Patent Classification (IPC) or to both national classification and IPC

**B.    FIELDS SEARCHED**

Minimum documentation searched (classification system followed by classification symbols)

H04N 19/96(2014.01); G06T 17/20(2006.01); G06T 3/40(2006.01); G06T 9/00(2006.01); G06T 9/40(2006.01); H04N 19/52(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포인트 클라우드(point cloud), 인터-프레딕션(inter-prediction), 글로벌 모션 (global motion), 로컬 모션(local motion), 예측(prediction), 트리(tree)

**C.    DOCUMENTS CONSIDERED TO BE RELEVANT**

| Category* | Citation of document, with indication, where appropriate, of the relevant passages | Relevant to claim No. |
| --- | --- | --- |
| X | US 2021-0104075 A1 (APPLE INC.) 08 April 2021 (2021-04-08) See paragraphs [0004], [0023], [0060] and [0076]; claims 1 and 16; and figures 6-7B. | 1,3-8,12-13 |
| Y | | 2,9-11,14-15 |
| Y | US 2021-0192798 A1 (BLACKBERRY LIMITED) 24 June 2021 (2021-06-24) See paragraphs [0055], [0057] and [0104]; and claim 1. | 2,9-11,14-15 |
| A | WO 2021-201384 A1 (LG ELECTRONICS INC.) 07 October 2021. See paragraphs [0005]-[0006]; and claims 1-7. | 1-15 |
| A | US 2021-0248785 A1 (TENCENT AMERICA LLC) 12 August 2021 (2021-08-12) See paragraphs [0005]-[0008]; and claims 1-12. | 1-15 |
| A | US 2021-0295566 A1 (SONY CORPORATION) 23 September 2021 (2021-09-23) See paragraphs [0007]-[0010]; and claims 1-7. | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 February 2023** | **14 February 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/016413**

| Patent document cited in search report | | | Publication date (day/month/year) | Patent family member(s) | | | Publication date (day/month/year) |
|---|---|---|---|---|---|---|---|
| US | 2021-0104075 | A1 | 08 April 2021 | CN | 114556429 | A | 27 May 2022 |
| | | | | EP | 4022573 | A1 | 06 July 2022 |
| | | | | US | 11538196 | B2 | 27 December 2022 |
| | | | | WO | 2021-067869 | A1 | 08 April 2021 |
| US | 2021-0192798 | A1 | 24 June 2021 | EP | 3633621 | A1 | 08 April 2020 |
| | | | | WO | 2020-069600 | A1 | 09 April 2020 |
| WO | 2021-201384 | A1 | 07 October 2021 | None | | | |
| US | 2021-0248785 | A1 | 12 August 2021 | CN | 113256746 | A | 13 August 2021 |
| | | | | EP | 3876499 | A2 | 08 September 2021 |
| | | | | EP | 3876499 | A3 | 23 February 2022 |
| | | | | US | 2022-0159029 | A1 | 19 May 2022 |
| US | 2021-0295566 | A1 | 23 September 2021 | CN | 114641797 | A | 17 June 2022 |
| | | | | EP | 4094224 | A1 | 30 November 2022 |
| | | | | KR | 10-2022-0137937 | A | 12 October 2022 |
| | | | | US | 11373339 | B2 | 28 June 2022 |
| | | | | WO | 2021-188238 | A1 | 23 September 2021 |

Form PCT/ISA/210 (patent family annex) (July 2022)